Europäisches Patentamt

European Patent Office

Office européen des brevets

(19)

(11) **EP 1 547 806 A1**

(12) **EUROPEAN PATENT APPLICATION**
published in accordance with Art. 158(3) EPC

(43) Date of publication:
**29.06.2005 Bulletin 2005/26**

(51) Int Cl.⁷: **B42D 15/10**, B41M 5/40,
G06K 19/10

(21) Application number: **03755680.0**

(22) Date of filing: **24.09.2003**

(86) International application number:
**PCT/JP2003/012141**

(87) International publication number:
**WO 2004/030929 (15.04.2004 Gazette 2004/16)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **04.10.2002 JP 2002292994**

(71) Applicant: **Konica Minolta Photo Imaging, Inc.
Shinjuku-ku, Tokyo 163-0512 (JP)**

(72) Inventor: **HATTORI, Ryoji,
Konica Minolta Photo Imaging, Inc.
Shinjuku-ku, Tokyo 163-0512 (JP)**

(74) Representative:
**Gille Hrabal Struck Neidlein Prop Roos
Patentanwälte,
Brucknerstrasse 20
40593 Düsseldorf (DE)**

(54) **AUTHENTICATION/IDENTIFICATION CARD**

(57)     A card substrate 100 having a first sheet member 101 using a white polyester support having a degree of whiteness of 80 through 95 percent and a second sheet member 102 laminated on the first sheet member 101. The first sheet member 101 has an image carrier layer 103 for carrying information and/or an image, and at least an ultraviolet absorber-containing layer 104 is arranged between the support member and image carrier layer 103. At least an ultraviolet absorber-containing layer 104 and a cushioning layer 105 are arranged between the support member and image carrier layer 103, and at least a silane coupling agent-containing layer 106 and a cushioning layer 105 are provided between the support member and image carrier layer 103.

## FIG. 3

CARD SUBSTRATE 100

IMAGE CARRIER LAYER 103

SILANE COUPLING AGENT-CONTAINING LAYER 106

ULTRAVIOLET ABSORBER-CONTAINING LAYER 104

CUSHIONING LAYER 105

FIRST SHEET MEMBER 101

SECOND SHEET MEMBER 102

EP 1 547 806 A1

**Description**

**FIELD OF THE INVENTION**

The present invention relates to a recognition-identification card including an identification card; and a contact or non-contact electronic or magnetic card, or an IC card for storing personal information required to ensure security against forgery and alteration. At the same time, it also refers to a method for manufacturing such a recognition-identification card.

**BACKGROUND OF THE INVENTION**

According to the prior art, a magnetic card for recording data by magnetic recording technique has widely been used as an ID card and credit card. However, the magnetic card allows easier rewriting of data, and this has presented various problems such as insufficient security against possible tampering of data, insufficient data protection resulting from vulnerability to external influence due to the very nature of magnetism, and lack of capacity for recording. To solve these problems, an IC card with built-in IC-chip has come into widespread use.

However, the quality of recording information on the prefabricated ID card has not always been satisfactory. For example, the surface of the IC-mounted card substrate has not been suited for use as a recording surface, because there are rough and uneven surfaces resulting from differences in hardness, thermal conductivity and thermal shrinkage ratio subsequent to hot pressing between the IC-mounted portions and other portions. The IC card in particular is more vulnerable to generation of rough surfaces than those without IC.

Several arts have been proposed to solve these problems. For example, an image carrier layer is provided with a cushion layer (e.g. Patent Document 1), or thermal shrinkage caused when printing a card is reduce (e.g. Patent Document 2), thereby improving recording performances.

It has been made clear that sharpness of an image is deteriorated by the whiteness of the substrate used in the card, in addition to the aforementioned rough surface of the card as described above. In the prior art, to improve the sharpness, the resin components of the image receiving layer were changed, thereby improving the recording density and resistance to light (e.g. Patent Document 3). Further, the recording method was changed to improve the sharpness (e.g. Patent Document 4).

Further, to improve the image sharpness and image resistance to light, an ultraviolet absorber is used on the card surface protective layer (e.g. Patent Documents 5, 6 and 7).

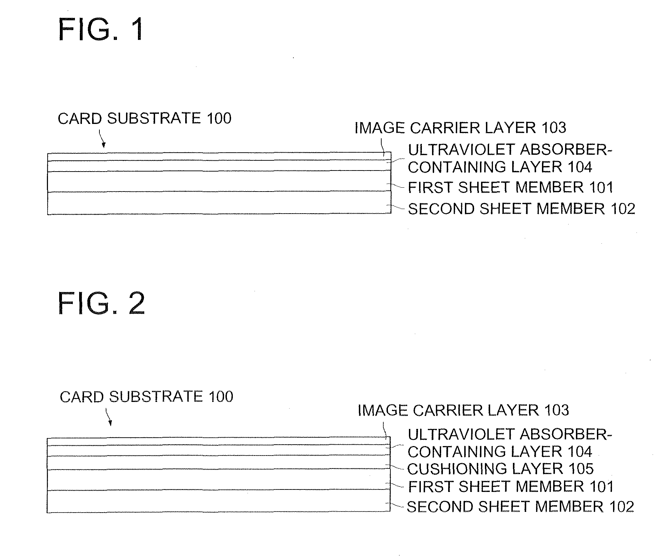

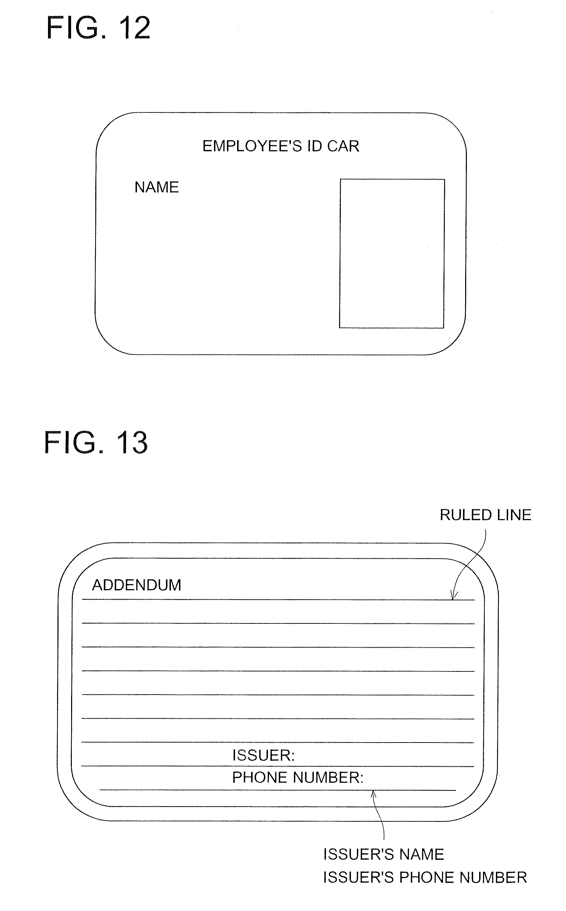

[Patent Document 1]
Japanese Patent Tokkaihei 7-88974 (pages 1 through 8, Figs. 1 through 3)
[Patent Document 2]
Japanese Patent Tokkai 2000-298714 (pages 1 through 8)
[Patent Document 3]
Japanese Patent Tokkaihei 9-66678 (pages 1 through 10, Fig. 13)
[Patent Document 4]
Japanese Patent Tokkaihei 10-315639
(Pages 1 through 8, Figs. 1 and 2)
[Patent Document 5]
Japanese Patent Tokkaihei 6-067592
(Pages 1 through 8, Figs. 1 through 3)
[Patent Document 6]
Japanese Patent Tokkaihei 7-205597
(Pages 1 through 7, Figs. 1 and 2)
[Patent Document 7]
Japanese Patent Tokkai 2002-211091 (pages 1 through 6, Figs. 1 through 3)

Incidentally, the art described in Patent Document 1 had a problem with durability of the card in that chemicals, water and others sank from the edge of the card due to poor chemical resistance of the cushion layer. The art described in Patent Document 2 has a problem in that the card was curled by shrinkage due to photo-curing when photo-curing was conducted. Further, to get a good cushioning effect, a porous film was used. However, the cushioning effect was not sufficient. The image sharpness resulting from a thermal transfer recording medium was is poor, and the chemical resistance of the cushion layer material was also sufficient, with the result that card durability deteriorated.

In the Patent Documents 3 and 4 where a white support member is used to conceal an IC chip and others, light is reflected by the white support member through the image section when light enters from the information recording surface provided on the white support member. This deteriorates the image quality.

In the Patent Documents 5 through 7 where an ultraviolet absorber is used on the card surface protective layer, the surface protecting performance is inferior due to the use of ultraviolet absorber, and the resistance to light is not sufficiently improved.

## DETAILED EXPLANATION OF THE INVENTION

The object of the present invention is to provide a recognition-identification card and a method of manufacturing the same wherein the light resistance, image sharpness and resistance to thermal yellowing are improved, and durability is also upgraded.

The following describes the present invention with reference to embodiments:

1. A recognition-identification card comprising a second sheet member, a first sheet member and an image carrier layer in that order, wherein the first sheet member is a white polyester having a degree of whiteness of 80 through 95 percent, and an ultraviolet absorber-containing layer is arranged between the first sheet member and image carrier layer.

2. The recognition-identification card described in the aforementioned Item 1 wherein a cushioning layer is arranged between the first sheet member and image carrier layer.

3. A recognition-identification card comprising a second sheet member, a first sheet member and an image carrier layer for carrying an image in that order, wherein the first sheet member is a white polyester having a degree of whiteness of 80 through 95 percent, and a silane coupling agent-containing layer and a cushioning layer are arranged between the first sheet member and image carrier layer.

4. The recognition-identification card described in the aforementioned Item 1 wherein an electronic parts-containing layer is arranged between the first and second sheet members.

5. The recognition-identification card described in the aforementioned Item 2 wherein an electronic parts-containing layer is arranged between the first and second sheet members.

6. The recognition-identification card described in the aforementioned Item 3 wherein an electronic parts-containing layer is arranged between the first and second sheet members.

7. The recognition-identification card described in any one of the aforementioned Items 2, 3, 5 and 6 wherein the cushioning layer is characterized in that the penetration displacement of a thermal mechanical analyzer (TMA) at a temperature of 100 degrees Celsius does not exceed 30 percent with respect to the thickness of cushioning layer, and the penetration displacement of a thermal mechanical analyzer (TMA) at a temperature of 170 degrees Celsius is not less than 30 percent with respect to the thickness of cushioning layer.

8. The recognition-identification card described in any one of the aforementioned Items 1 through 7 wherein the image carrier layer is further characterized in that an image is set according to the sublimation heat transfer method and/or any one of the fusion heat transfer method, inkjet method and retransfer.

9. Recognition-identification card comprising a second sheet member, a first sheet member and an image carrier layer in that order, wherein the first sheet member is a white polyester having a degree of whiteness of 80 through 95 percent, and a surface protective layer containing at least a photocurable resin and an ultraviolet absorber is arranged on the image carrier layer.

10. The recognition-identification card described in the aforementioned Item 9 wherein an electronic parts-containing layer is arranged between the first and second sheet members.

11. The recognition-identification card described in any one of the aforementioned Items 1 through 10 wherein identification information and bibliographical information are recorded on the image carrier layer.

12. The recognition-identification card described in the aforementioned Item 11 wherein identification information represents personnel information on address, name and the date of birth.

13. The recognition-identification card described in any one of the aforementioned Items 1 through 10 wherein a face image is recorded on the image carrier layer.

14. A method of manufacturing a recognition-identification card wherein:

an image is formed on an image carrier layer; and
a surface protective layer containing the photocurable resin and ultraviolet absorber is transferred onto the card substrate containing a second sheet member, a first sheet member composed of white polyester having a degree of whiteness of 80 through 95 percent, and an image carrier layer in that order, using a photocurable resin layer and a transfer foil containing an ultraviolet absorber on the image carrier layer with the image formed thereon.

15. A method of manufacturing a recognition-identification card wherein:

an image is formed on an image carrier layer; and

a surface protective layer containing the photocurable resin and ultraviolet absorber is transferred onto the card substrate containing a second sheet member, a first sheet member composed of a white polyester having a degree of whiteness of 80 through 95 percent, and an image carrier layer in that order, as well as a layer containing electronic parts between the first and second sheet members, using a photocurable resin layer and a transfer foil containing an ultraviolet absorber on the image carrier layer with the image formed thereon.

16. The method of manufacturing a recognition-identification card described in the aforementioned Item 14 or 15 wherein identification information and bibliographical information are recorded on the image carrier layer.

17. The method of manufacturing a recognition-identification card described in the aforementioned Item 16 wherein identification information represents personnel information on address, name and the date of birth.

18. The method of manufacturing a recognition-identification card described in the aforementioned Item 14 or 15 wherein a face image is recorded on the image carrier layer.

**BRIEF DESCRIPTION OF THE DRAWINGS**

Fig. 1 is a schematic configuration diagram representing a recognition-identification card;

Fig. 2 is a schematic configuration diagram representing a recognition-identification card as another embodiment;

Fig. 3 is a schematic configuration diagram representing a recognition-identification card as a further embodiment;

Fig. 4 is a schematic configuration diagram representing a recognition-identification card;

Fig. 5 is a schematic configuration diagram representing a recognition-identification card as a still further embodiment;

Fig. 6 is a schematic configuration diagram representing a recognition-identification card as a still further embodiment;

Figs. 7 (a) through (e) are schematic configuration diagrams representing a recognition-identification card as a still further embodiment;

Figs. 8 (a) through (e) are schematic configuration diagrams representing a recognition-identification card as a still further embodiment;

Figs. 9 (a) and (b) are diagrams representing a method of manufacturing a recognition-identification card;

Figs. 10 (a) and (b) are diagrams representing a method of manufacturing a recognition-identification card;

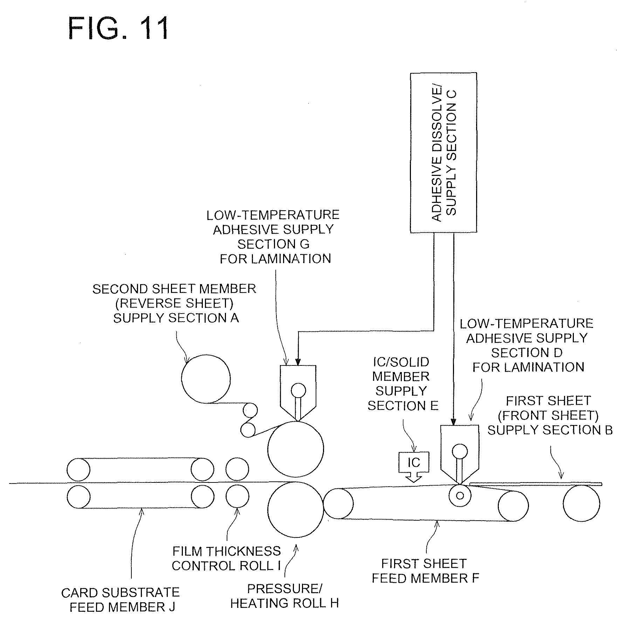

Fig. 11 is a schematic configuration diagram representing a card substrate manufacturing apparatus;

Fig. 12 is a front side view of an ID card or IC card;

Fig. 13 is a reverse side view of an ID card or IC card;

Fig. 14 is a front side view of an ID card or IC card;

Fig. 15 is a reverse side view of an ID card or IC card;

Fig. 16 is a schematic configuration diagram representing a card substrate manufacturing apparatus;

Fig. 17 is a schematic configuration diagram representing a card substrate manufacturing apparatus; and

Fig. 18 is a schematic configuration diagram representing a card substrate manufacturing apparatus.

**DESCRIPTION OF THE PREFERRED EMBODIMENT**

The following describes the recognition-identification card and the method of manufacturing the same, with reference to drawings:

Fig. 1 is a schematic configuration diagram (cross sectional view) representing a recognition-identification card. A card substrate 100 contains the first sheet member 101 and second sheet member 102. The first sheet member 101 is a white polyester having a degree of whiteness of 80 through 95, and the second sheet member 102 is provided on the first sheet member 101.

An ultraviolet absorber-containing layer 104 and an image carrier layer 103 for carrying information and/or image are provided in that order on the first sheet member 101. The image carrier layer 103 is provided with an image according to the sublimation heat transfer method and/or the fusion heat transfer method, inkjet method or retransfer. In this case, the image carrier layer 103 is also called an image receiving layer.

The first sheet member 101 is a white polyester having a degree of whiteness of 80 through 95 percent and is provided with the ultraviolet absorber-containing layer 104. This arrangement ensures excellent light resistance and image sharpness.

Fig. 2 is a schematic configuration diagram (cross sectional view) representing a recognition-identification card as another embodiment. An ultraviolet absorber-containing layer 104 and a cushioning layer 105 are arranged between the first sheet member 101 and image carrier layer 103. In Fig. 2, an ultraviolet absorber-containing layer 104 is arranged on the side of the image carrier layer 103. It is also possible to arrange such a configuration that the cushioning layer 105 is arranged on the side of the image carrier layer 103.

The cushioning layer is provided with such flexibility and thermal conductivity that the penetration displacement of a thermal mechanical analyzer (TMA) at a temperature of 100 degrees Celsius does not exceed 30 percent with respect to the thickness of cushioning layer, and the penetration displacement of a thermal mechanical analyzer (TMA) at a temperature of 170 degrees Celsius is not less than 30 percent with respect to the thickness of cushioning layer.

The ultraviolet absorber-containing layer 104 is arranged between the white polyester, of the first sheet member 101, having a degree of whiteness of 80 through 95 percent and the image carrier layer 103. This arrangement provides excellent light resistance and image sharpness. Since the cushioning layer 105 is provided, recording is characterized by reduced noise and excellent reproducibility in response to the image information.

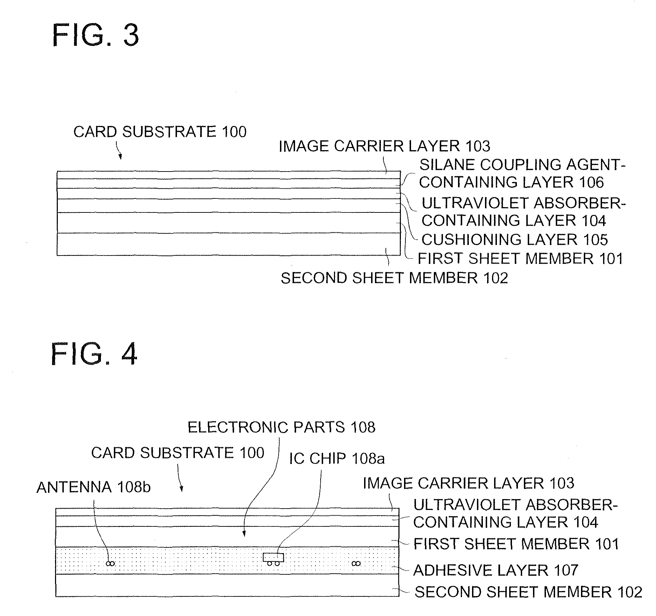

Fig. 3 is a schematic configuration diagram representing a recognition-identification card as a further embodiment. A silane coupling agent-containing layer 106 and cushioning layer 105 are provided between the first sheet member 101 and the image carrier layer 103. In Fig. 3, the silane coupling agent-containing layer 106 is located on the side of the image carrier layer 103. The cushioning layer 105 can be located on the side of the image carrier layer 103. At least the silane coupling agent-containing layer 106 is arranged between the white polyester, of the first sheet member 101, having a degree of whiteness of 80 through 95 percent and the image carrier layer 103. This arrangement provides excellent image sharpness, and superb resistance against entry of water between layers. It prevents close adhesion from being deteriorated even when dipped in water. The presence of the cushioning layer 105 reduces the noise, and allows the image to be recorded in conformity to image information and ensures excellent reproducibility of the recorded image.

Fig. 4 is a schematic configuration diagram (cross sectional view) representing a recognition-identification card. This recognition-identification card is an IC card, and the card substrate 100 contains:

a first sheet member 101;
a second sheet member 102; and
an adhesive layer 107 further including electronic parts 108 arranged between first sheet member 101 and second sheet member 102. The first sheet member 101 is a white polyester having a degree of whiteness of 80 through 95. The first sheet member 101 and second sheet member 102 are laminated by the adhesive layer 107, and the adhesive layer 107 is provided with electronic parts 108. The electronic parts 108 contain an IC chip 108a and an antenna 108b.

The ultraviolet absorber-containing layer 104 is provided between the first sheet member 101 of white polyester having a degree of whiteness of 80 through 95 and the image carrier layer 103. This arrangement improves light resistance and image sharpness and minimizes yellowing during a long-term storage when the first sheet member is stored at a high temperature, with the result that image sharpness does not deteriorate.

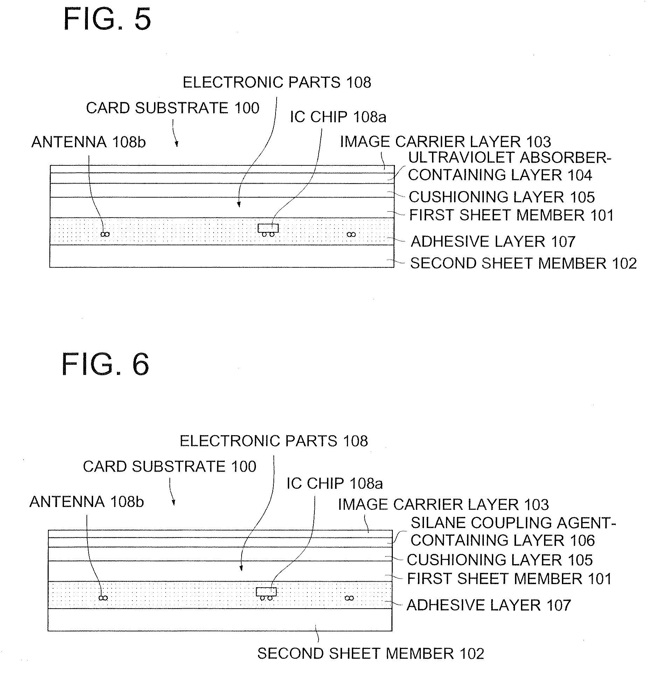

Fig. 5 is a schematic configuration diagram representing a recognition-identification card as a still further embodiment. This recognition-identification card is an IC card. The ultraviolet absorber-containing layer 104 and cushioning layer 105 are arranged between the first sheet member 101 and image carrier layer 103. In this embodiment, the presence of at least the ultraviolet absorber-containing layer 104 between the first sheet member 101 of white polyester having a degree of whiteness of 80 through 95 and the image carrier layer 103 improves light resistance and image sharpness and minimizes yellowing during a long-term storage when the first sheet member is stored at a high temperature, with the result that image sharpness does not deteriorate. The presence of the cushioning layer 105 reduces the noise, allows the image to be recorded in conformity to image information and ensures excellent reproducibility of the recorded image.

Fig. 6 is a schematic configuration diagram representing a recognition-identification card as a still further embodiment. This recognition-identification card is an IC card. The silane coupling agent-containing layer 106 and cushioning layer 105 are arranged between the first sheet member 101 and image carrier layer 103. At least the silane coupling agent-containing layer 106 is provided between the first sheet member 101 of white polyester having a degree of whiteness of 80 through 95 and the image carrier layer 103. This arrangement improves image sharpness and provides superb resistance against entry of water between layers. It prevents close adhesion from being deteriorated even when dipped in water. The presence of the cushioning layer 105 reduces the noise, allows the image to be recorded in conformity to image information, and ensures excellent reproducibility of the recorded image.

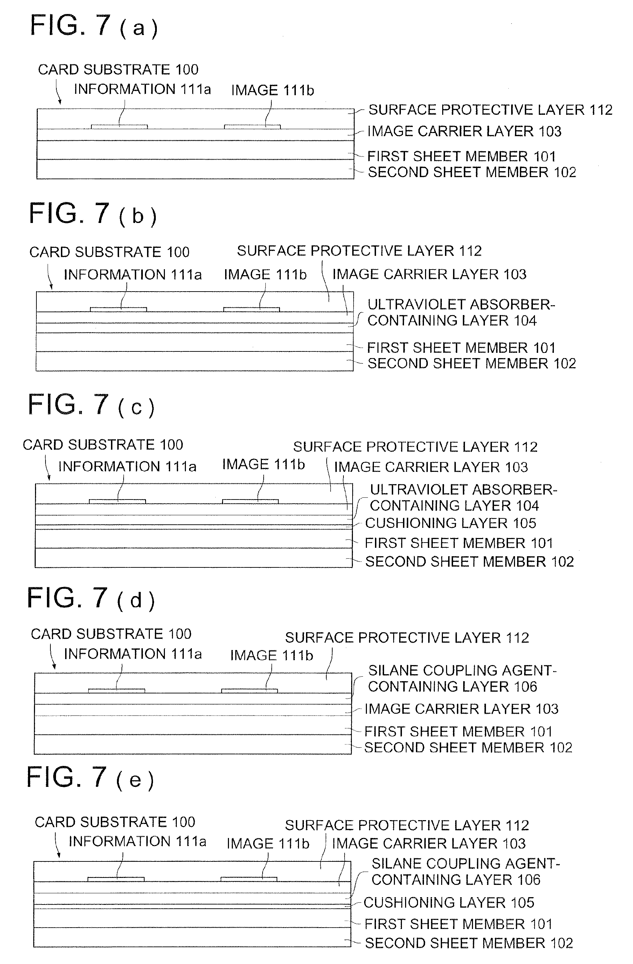

Fig. 7 is a schematic configuration diagram representing a recognition-identification card as a still further embodiment. This recognition-identification card is an ID card, and comprises the first sheet member 101 of white polyester having a degree of whiteness of 80 through 95 and the second sheet member 102. Information 111a and/or image 111b are provided on the image carrier layer 103 of the first sheet member 101. After information 111a and/or image 111b have been provided, a surface protective layer 112 is provided. The surface protective layer 112 improves light resistance, image sharpness and resistance to thermal yellowing. It further improves durability.

In Fig. 7 (b), the ultraviolet absorber-containing layer 104 is located between the first sheet member 101 and image carrier layer 103. In Fig. 7 (c), the cushioning layer 105 and ultraviolet absorber-containing layer 104 are arranged between the first sheet member 101 and image carrier layer 103. In Fig. 7 (d), the silane coupling agent-containing layer 106 is arranged between the image carrier layer 103 and surface protective layer 112. In Fig. 7 (e), the cushioning layer 105 and silane coupling agent-containing layer 106 are arranged between the first sheet member 101 and image carrier layer 103.

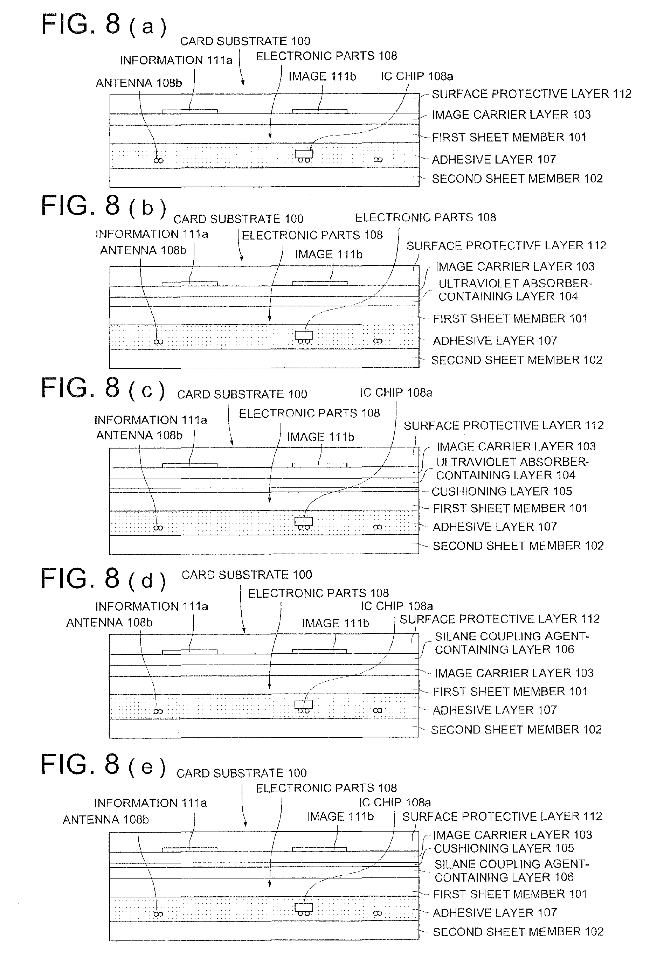

Fig. 8 is a schematic configuration diagram representing a recognition-identification card as a still further embodiment. This recognition-identification card is an IC card. In Fig. 8 (a), the card substrate 100 is located between the first sheet member 101 and second sheet member 102. The adhesive layer 107 including the electronic parts 108 composed of the IC chip 108a and antenna 108b are provided between this first sheet member 101 and second sheet member 102. Information 111a and/or image 111b are provided on the image carrier layer 103 of the first sheet member 101. The surface protective layer 112 containing the photocurable resin layer and ultraviolet absorber are arranged on the information 111a and/or image 111b. The surface protective layer 112 improves light resistance, image sharpness and resistance to thermal yellowing. It further improves durability.

The embodiment shown in Fig. 8 (b) has the same configuration as that in Fig. 8 (b). The ultraviolet absorber-containing layer 104 is located between the first sheet member 101 and image carrier layer 103. In the embodiment shown in Fig. 8 (c), the cushioning layer 105 and ultraviolet absorber-containing layer 104 are arranged between the first sheet member 101 and image carrier layer 103. In the embodiment shown in Fig. 8 (d), the silane coupling agent-containing layer 106 is provided between the image carrier layer 103 and surface protective layer 112. In the embodiment shown in Fig. 8 (e), the cushioning layer 105 and silane coupling agent-containing layer 106 are arranged between the first sheet member 101 and image carrier layer 103.

In this embodiment, the image carrier layer 103 containing the information 111a and/or image 111b is protected by the surface protective layer 112 including at least the photocurable resin layer ultraviolet absorber. The information 111a is identification information and bibliographical information, and can be used in the identification card (ID card), and a contact or non-contact electronic or magnetic card, or an IC card for storing personal information required to ensure security against forgery and alteration.

The identification information represents personnel information on address, name and the date of birth. The image shows the face of a person.

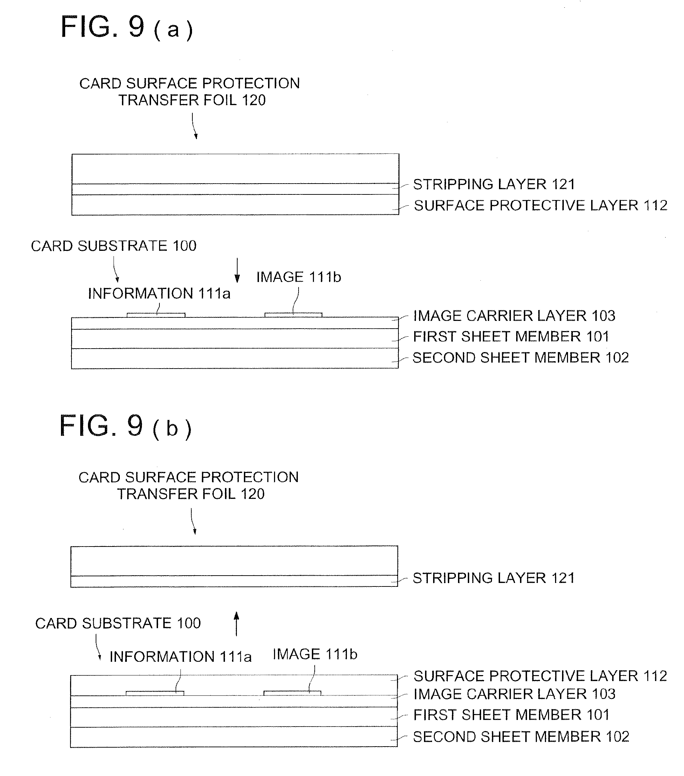

Fig. 9 is a diagram representing a method of manufacturing a recognition-identification card. Information 111a and/or image 111b are recorded on the image carrier layer 103 of the card substrate 100 of the ID card. Then the surface protective layer 112 is transferred through a stripping layer 121, using a card surface protective transfer foil 120 provided with the surface protective layer 112 containing the photocurable resin layer and ultraviolet absorber.

As described above, the surface protective layer 112 arranged on the image carrier layer 103 of the card substrate 100 improves light resistance and image sharpness and minimizes yellowing during a long-term storage when the first sheet member is stored at a high temperature, with the result that image sharpness does not deteriorate. Fig. 9 is a schematic drawing where a transfer has taken place. Here the stripping layer is held by the sheet member without being transferred. It can be held in position or transferred; the choice depends the type of the material.

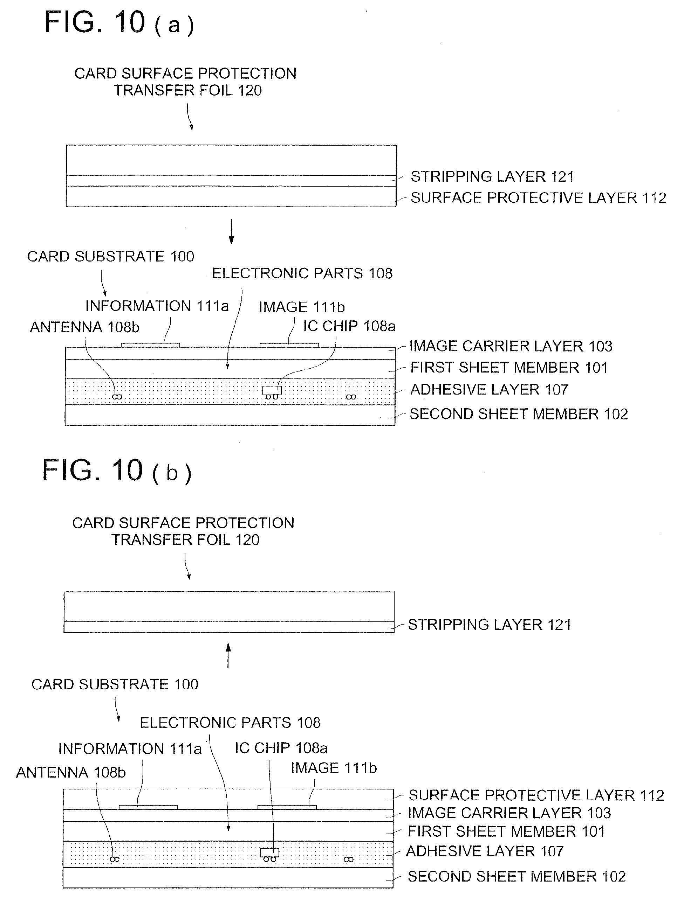

Fig. 10 is a diagram representing a method of manufacturing a recognition-identification card. Information 111a and/or image 111b are recorded on the image carrier layer 103 of the card substrate 100 of the IC card. Then the surface protective layer 112 is transferred through a stripping layer 121, using a card surface protective transfer foil 120 provided with the surface protective layer 112 containing at least the photocurable resin layer and ultraviolet absorber.

As described above, the surface protective layer 112 arranged on the image carrier layer 103 of the card substrate 100 improves light resistance and image sharpness and minimizes yellowing during a long-term storage when the first sheet member is stored at a high temperature, with the result that image sharpness does not deteriorate. Fig. 10 is a schematic drawing where a transfer has taken place. Here the stripping layer is held by the sheet member without being transferred. It can be held in position or transferred; the choice depends the type of the material.

## BEST FORM OF EMBODIMENT OF THE PRESENT INVENTION

The following provides a detailed description of the present invention:

[Card substrate]

The IC card is made of the first sheet member and second sheet member bonded together by an adhesive wherein an IC module containing the IC chip and antenna is built.

The following provides a detailed description of the present invention:

<Sheet member for card>

The first sheet member uses a white polyester having a degree of whiteness of 80 through 95 percent. The white polyester is preferably formed by preliminary addition of a white pigment such as titanium white, magnesium carbonate, zinc oxide, barium sulfide, silica, talc, clay and calcium carbonate. The degree of whiteness will be described later.

The second sheet member is exemplified the synthetic resin sheet, paper such as bond paper, glassine paper and parchment paper, a single layer of metallic foil and others, and a laminated layer of two or more such single layers, wherein the synthetic resin sheet is composed of:

polyethylene terephthalate, polybutylene terephthalate, polyethylene terephthalate/isophthalate copolymer and other polyester resins similar to them; polyethylene, polypropylene, polymethyl pentene and other polyolefin resins similar to them; polyvinyl fluoride, polyvinylidene fluoride, polyethylene tetrafluoride copolymer and other polyethylene fluoride resins similar to them; nylon 6, nylon 6.6 and other polyamides similar to them; polyvinyl chloride, vinyl chloride, vinyl chloride/vinyl acetate copolymer, ethylene/vinyl acetate copolymer, ethylene/vinyl alcohol copolymer, polyvinyl alcohol, vinylon and other vinyl polymers similar to them; biodegradable aliphatic polyester, biodegradable polycarbonate, biodegradable polylactic acid, biodegradable polyvinyl alcohol, biodegradable cellulose acetate, biodegradable polycaprolactone and other biodegradable resins similar to them; cellulose triacetate, cellophane and other cellulose resins similar to them; polymethyl methacrylate, polyethyl methacrylate, polyethyl acrylate, polybutyl acrylate and other acryl resins similar to them; and polystyrene, polycarbonate, polyarylate, polyimide and other synthetic resins similar to them. The thickness is 30 through 300 $\mu$m, preferably 50 through 200 $\mu$m.

The ID card substrate and electronic parts-mounted IC card substrate can be composed of a plurality of sheets, or a plurality of different substrates or substrates having different thicknesses laminated one on top of another, depending on the circumstances. When a plurality of substrates are laminated, the same angle of orientation or the adjusted angle of orientation of each substrate may be used for the first sheet member or second sheet member. It is preferred to adjust the angle of orientation for the purpose of solving the problems of curling and twisting. Further, the substrate can be provided with adhesion promoting treatment. In this case, the layer of a resin such as latex and hydrophilic resin is used. If required, the substrate may be subjected to adhesion promoting treatment such as corona treatment and plasma treatment. Further, to reduce thermal shrinkage, annealing may be applied. Furthermore, static eliminating treatment may be applied to the card substrate. In the present invention, annealing and static eliminating treatment are preferably provided.

The first sheet member or second sheet member preferably uses a white substrate having a specific degree of whiteness to improve the concealing efficiency of electronic parts, image sharpness and resistance to thermal yellowing. Use of a white polyester having a degree of whiteness (Hunter's method) of 80 through 95 percent is preferred in particular. The white polyester is preferably formed by preliminary addition of a white pigment such as titanium white, magnesium carbonate, zinc oxide, barium sulfide, silica, talc, clay and calcium carbonate.

<Measuring the degree of whiteness>

The degree of whiteness was measured using the Digital Hunter whiteness meter by Toyo Seikiseisakujo Co., Ltd. according to the test method for opacity of paper provided in JIS-P8138.

In the present invention, the sheet member having a specific degree of whiteness of is preferably used to reduce the reflection of light, and an ultraviolet absorber-containing layer, cushioning layer or silane coupling agent-containing layer is preferably arranged between the sheet member and image carrier layer. The ultraviolet absorber-containing layer arranged adjacent to the sheet member avoids the light reflected from the surface, and improves light resistance. Further, the cushioning layer helps create a card characterized by reduced noise and excellent image sharpness. The silane coupling agent-containing layer improves close adhesion resulting from deterioration of water resistance between the image carrier layer and sheet member. The ultraviolet absorber-containing layer, cushioning layer or silane coupling agent-containing layer in the present invention can be arranged on either the first or second sheet member. The ultraviolet absorber-containing layer is preferably provided on the second sheet member.

The following describes the ultraviolet absorber-containing layer cushioning layer or silane coupling agent-containing layer that can be used in the present invention:

<Ultraviolet absorber-containing layer>

The ultraviolet absorber-containing layer includes an ultraviolet absorber. It can also include a binder, surface active agent, static eliminating agent, light stabilizer or oxidant inhibitor.

Any ultraviolet absorber can be used for the present invention if it absorbs ultraviolet rays of a color image and permits thermal transfer. For example, it is possible to use the compounds described in the Japanese Patent Tokkaisho 59-158287, Japanese Patent Tokkaisho 63-74686, Japanese Patent Tokkaisho 63-145089, Japanese Patent Tokkaisho 59-196292, Japanese Patent Tokkaisho 62-229594, Japanese Patent Tokkaisho 63-122596, Japanese Patent Tokkaisho 61-283595 and Japanese Patent Tokkaihei 1-204788. It is also possible to use the compounds for improving the image durability of photographs and other image recording media.

To put it more specifically, salicylic acid derivatives, benzophenone derivatives, benzotriazole derivatives and cyano acrylate derivatives can be used. They includes Tinuvin P, Tinuvinyl 23, 234, 320, 326, 327, 328, 312, 315, 384 and 400 (by Chiba Geigie Inc.), Sumisorb-110, 130, 140, 200, 250, 300, 320, 340, 350 and 400 (by Sumitomo Chemical Co., Ltd.) and MarkLa-32, 36 and 1413 (by Adekaahgas Kagaku Inc.). A pendant polymer having a benzophenone derivative in a side chain is preferably used. It is also possible to use the inorganic material fine grain capable of absorbing in the ultraviolet area and ultrafine grain metallic oxide powder dispersant. The inorganic material includes titanium oxide, zinc oxide and silicon compound. The ultraviolet area and ultrafine grain metallic oxide powder dispersant includes the ultrafine grain zinc oxide powder, ultrafine grain titanium oxide powder and others produced by using water, alcohol mixture, various types of oil dispersion media, surface active agent, water soluble high polymer and solvent soluble high polymer.

The oxidant inhibitor includes the ones disclosed in the Japanese Patent Tokkaisho 59-182785, Japanese Patent Tokkaisho 60-130735, Japanese Patent Tokkaihei 1-127387 and others, and the compound for improving the image durability in the photograph and other image recording medium. To put it more specifically, the primary oxidant inhibitor such as phenol, monophenol, bisphenol and amine derivatives and the secondary oxidant inhibitor such as sulfur and phosphorus derivatives can be mentioned. For example, they are the compounds known by the following trade names: Sumilizer BBM-S, BTH, BP-76, MDP-S, GM, WX-R, BP-179, GA, TPM, TP-D, TNP (by Sumitomo Chemical Co., Ltd.), Irganox-245, 259, 565, 1010, 1035, 1076, 1081, 1098, 3114 (by Chiba Geigie Inc.), MarkAQ-20, AO-30, AO-40 (by Adekaahgas Kagaku Inc.).

The light stabilizer includes the compounds described in the Japanese Patent Tokkaisho 59-158287, Japanese Patent Tokkaisho 63-74686, Japanese Patent Tokkaisho 63-145089, Japanese Patent Tokkaisho 59-196292, Japanese Patent Tokkaisho 62-229594, Japanese Patent Tokkaisho 63-122596, Japanese Patent Tokkaisho 61-283595 and Japanese Patent Tokkaihei 1-204788. It also includes the compounds for improving the image durability of photographs and other image recording media. To put it more specifically, it includes the hindered amine derivatives, such as the ones known by the trade names of Tinuvin 622LD, 144, Chimassob 944 LD (by Chiba Geigie Inc.), Sanol LS-770, LS-765, LS-292, LS-2626, LS-114, LS-774 (Sankyo Co., Ltd.), and Mark LA-62, LA-67, LA-63, LA-68, LA-82 and LA-87 (by Adekaahgas Kagaku Inc.).

The following can be used jointly: The thermosetting plastic resin includes vinyl chloride, polyester resin, acryl resin, polyvinyl acetate resin, polyvinyl butyral resin, polyamide resin, epoxy resin, acryl resin, silicone resin, polyvinyl alcohol, polycarbonate, cellulose resin, styrene resin, urethane resin, urethane acrylate resin, amide resin, urea resin, epoxy resin, phenoxy resin, and polycaprolactone resin. The thermosetting plastic elastomer that can be used includes styrene derivatives (styrene block copolymer (SBC)), olefin derivatives (TP), urethane derivatives (TPU), polyester derivatives (TPEE), polyamide derivatives (TPAE), 1, 2-polybutadiene derivatives, vinyl chloride derivatives (TPVC), fluorine derivatives, ionomer resin, polyethylene chloride and silicone derivatives. To put it more specifically, EBS resin, SEPS resin and their modified substances described in "12996 Chemical Products" for 1996 (Kagaku Kogyo Nippo Co., Ltd.) can be used. These resins can be used independently or in combination with others. Further, such thermosetting plastic resins as polybutyral, polyurethane and epoxy resins are independently of the degree of polymerization prior to thermal setting. A resin having a low degree of polymerization can also be utilized. An isocyanate curing agent, epoxy curing agent or amine compound can be used for thermosetting.

The amount of ultraviolet absorber is preferably 0.05 through 20 wt% with reference to 100 wt% of binder, more preferably 0.05 through 10 wt% exclusive. The thickness of the ultraviolet absorber is preferably 0.05 through 15.0 g/m$^2$, more preferably 0.05 through 10 g/m$^2$, still more preferably 0.1 through 10.5 g/m$^2$.

<Cushioning layer>

The material of the cushioning layer includes urethane resin, acrylic resin, ethylene resin, polypropylene resin, butadiene rubber, epoxy resin, polyolefin, ethylene-vinyl acetate copolymer, ethylene-ethylacrylate copolymer, styrenebutadiene-styrene block copolymer, styrene-isoprene-styrene block copolymer, styrene-ethylene-butadiene-styrene block copolymer, styrene-hydrogenated isoprene-styrene block copolymer, polybutadiene and other resins, of low heat conductivity, having such a flexibility as found in the photocurable resin described in Tokugan 2001-1693. To get the cushion layer of this invention, the displacement of penetration by the thermal mechanical analyzer (TMA) at a temperature of 100 degrees Celsius is preferably 30% or less with respect to the thickness of the layer, and the displacement of penetration by the thermal mechanical analyzer (TMA) at a temperature of 170 degrees Celsius is preferably 30% or more with respect to the thickness of the layer. If the displacement of penetration at a temperature of 170 degrees Celsius is 30% or less, the image sharpness will deteriorate. If the displacement of penetration at a temperature of 100 degrees Celsius is 30% or more, the heat resistance of the card will deteriorate.

In the thermal mechanical analysis by the thermal mechanical analyzer (TMA), the aperiodic load is applied according to the compression method, tension method or bending method while the temperature of a substance is changed in conformity to the program, and the change of the substance is measured as a function of temperature.

The thickness of the cushioning layer is 1 through 50 $\mu$m or preferably 3 through 30 $\mu$m. The cushioning layer for the present invention can be any layer if it has a cushioning function. It is provided between the image carrier layer and first sheet member. The cushioning layer is most preferably coated or laminated on the first sheet member. A surface active agent, static eliminating agent, light stabilizer, oxidant inhibitor and ultraviolet absorber may be contained as other additives.

<How to measure the penetration displacement and thermo softening point in a thermal mechanical analyzer>

A thermally softened layer was formed on the sheet member and the sample was cut into a size of 4 x 4 mm$^2$. Then penetration displacement (%) with respect to the thickness of the layer was measured at temperatures of 100 and 170 degrees Celsius by a thermal mechanical analyzer (Thermoflex by Rigaku Denki Co., Ltd.).

<Silane coupling agent-containing layer>

The silane coupling agent of the present invention includes the agent disclosed in the Japanese Patents Tokkaihei 2-4258 and 4-161957.

It includes N-3-(acryloxy-2-hydroxypropyl)-3-aminopropyl triethoxy silane, (3-acryloxypropyl) dimethyl methoxy silane, (3-acryloxypropyl) methyl dimethoxy silane, (3-acryloxypropyl) trimethoxy silane, 3-(N-allyl amino) propyl trimethoxy silane, allyl dimethoxy silane, allyl triethoxy silane, allyl trimethoxy silane, 3-butenyl triethoxy silane, 2-(chloromethyl) allyl trimethoxy silane, methacryl amidepropyl triethoxy silane, N-(3-methacryloxy-2-hydroxy propyl)-3-aminopropyl triethoxy silane, (methacryloxy dimethyl)dimethylethoxy silane, methacryloxy methyl trimethoxy silane, methacryloxy methyl trimethoxy silane, methacryloxy propyl dimethyl methyl ethoxy silane, methacryloxy propyl dimethyl methoxy silane, methacryloxy propyl methyl diethoxy silane, methacryloxy propyl methyl diethoxy silane, methacryloxy propyl methyl triethoxy silane, methacryloxy propyl methyl trimethoxy silane, methacryloxy propyl tris(methoxy ethoxy) silane, methoxy dimethyl vinyl silane, 1-methoxy-3-(trimethyl cyloxy)butadiene, styryl ethyl trimethoxy silane, 3-(N-styryl methyl-2-amino ethylamine)-propyl trimethoxy silane hydrochloride, vinyl dimethyl ethoxy silane, vinyl diphenyl ethoxy silane, vinyl methyl diethoxy silane, vinyl methyl dimethoxy silane, 0-(vinyloxy ethyl)-N-(triethoxy silyl propyl) urethane, vinyl triethoxy silane, vinyl trimethoxy silane, vinyl tri-t-butoxy silane, vinyl triisopropoxy silane, vinyl triphenoxy silane, vinyl tris(2-methoxy ethoxy) silane and diallyl aminopropyl methoxy silane.

Further, the thermosetting plastic resin, thermosetting plastic elastomer and such similar resins can be used. Other materials that can be included are a coupling agent such as aluminum and titanium based agent, surface active agent, static eliminating agent, light stabilizer, oxidant inhibitor and ultraviolet absorber. The added amount of the silane coupling agent contained in the silane coupling agent layer is 20 through 100 wt%, preferably 50 through 100 wt%, with respect to the total solids of the layer.

<Others>

The aforementioned ultraviolet absorber-containing layer, cushioning layer or silane coupling agent-containing layer are preferably arranged between the first card substrate and image carrier layer. As described above, however, the sheet member may be provided with adhesion promoting treatment. The layer may be composed of a resin such as latex and hydrophilic resin is used. Depending on the circumstances, adhesion promoting treatment such as corona treatment and plasma treatment may be provided. The adhesion promoting treatment of the sheet member may be provided either before or after the ultraviolet absorber-containing layer cushioning layer or silane coupling agent-containing layer.

If required, the first sheet member may be provided with an embossed pattern, sign, IC memory, optical memory, magnetic recording layer, forgery/alteration preventive print layer (pearl pigment layer, water-mark printing, microscopic letters, etc.), embossed print layer and concealed IC chip layer.

<Image carrier layer>

The first sheet member is preferably provided with an image carrier layer so that an information carrier containing identification information and bibliographical information will be formed. The image carrier layer is exemplified by an image receiving layer. This can be made up of a binder and various additives.

A full color image having a gradation can be formed on the image carrier layer. For example, an image is recorded by sublimation heat transfer method/fusion heat transfer method, inkjet method or retransfer. Further, the image of text information is composed of a binary image and is formed by sublimation heat transfer method/fusion heat transfer method, inkjet method or retransfer method. More preferably, the image of text information is formed by sublimation heat transfer method or fusion heat transfer recording method. This requires excellent dyeing property of the sublimable pigment and excellent bondability of the hot melt type ink. In order to provide the image carrier layer with such special properties, the type and blending ratio of the binder and various types of additives must be adequately adjusted, as will be described later.

The following describes the components forming an image receiving layer as an example of the image carrier layer:

(Image receiving layer)

The commonly known binder of the image receiving layer for sublimation heat transfer and recording can be used appropriately as the binder of the image receiving layer contained in the first sheet member of the present invention. For example, polyvinyl chloride, copolymer resin between polyvinyl chloride and other monomers (e.g. isobutyl ether and vinyl propionate), polyester resin, poly(metha)acrylic ester, polyvinyl pyrrolidone, polyvinyl acetal resin, polyvinyl butyral resin, polyvinyl alcohol, polycarbonate, cellulose triacetate, polystyrene, copolymer between styrene and other monomers (e.g. acrylate, acrylic ester, acrylonitrile and ethylene chloride), vinyl toluene acrylate resin, polyurethane, polyamide resin, urea resin, epoxy resin, phenoxy resin, polycaprolactone resin, polyacrylonitrile resin, and their modified substances. It is preferred to use polyvinyl chloride resin, copolymer resin between polyvinyl chloride and other monomers, polyester resin, polyvinyl acetal resin, polyvinyl butyral resin, copolymer between styrene and other monomers, epoxy resin, photocurable resin, thermosetting plastic resin and various types of binders.

If there is an actual requirement (e.g. requirement of a specified heat resistance from the issued ID card) with respect to the image formed by the present invention, the type and combination of binders are adjusted in order to meet the requirement. To take an example of the heat resistance of an image: If heat resistance of 60 degrees Celsius or more is required, it is preferred to use the binder having a Tg value of 60 degrees Celsius or more, with consideration given to the bleeding of a sublimable pigment.

When forming an image receiving layer in the present invention, inclusion of metal ion-containing compound is preferred. In particular, the heat migratory compound reacts with this metal ion-containing compound to form a chelate.

A divalent and polyvalent metal in the Group I or VIII of the periodic table can be mentioned as a metal ion constituting the aforementioned metal ion-containing compound. Preferred elements include Al, Co, Cr, Cu, Fe, Mg, Mn, Mo, Ni, Sn, Ti and Zn. Particularly preferred elements include Ni, Cu, Co, Cr and Zn. The preferable compounds containing these metal ions include the inorganic or organic salt of the metal, and complex of the metal. To put it more specifically, the complex, containing $Ni^{2+}$, $Cu^{2+}$, $Co^{2+}$, $Cr^{2+}$ and $Zn^{2+}$, expressed by the following general formula is preferably utilized:

$$[M(Q1) \ k \ (Q^2) \ m \ (Q3) \ n] \ p + p \ (L^-)$$

where M in the formula denotes metal ion, and Q1, Q2 and Q3 indicate coordinate compounds, expressed by "M", which can coordinate with the metal ion. For example, they can be selected from the coordinate compounds given in "Chelate Chemical (5)" (Nankodo Co., Ltd.). A particularly preferred compound is the coordinate compound, containing at least one amino group, which coordinates with metal. To put it more specifically, such a compound includes ethylene diamine, and its derivatives, glycine amide and its derivatives, and picolinic amide and its derivatives.

"L" denotes a counter anion that can form a complex, and includes an inorganic compound anion such as Cr, SO4 and C104, and an organic compound such as benzene sulfonic acid derivative and alkyl sulfonic acid derivative. Particularly preferred ones include tetraphenyl boron anion and its derivative, and alkyl benzene sulfonic acid and its derivative. "k" denotes the integer of 1, 2 or 3, and "m" shows 1, 2 or 0. "n" represents 1 or 0. They depends on whether the complex expressed in the aforementioned general formula is a quadridentate or sexadentate ligand, or are determined by the number of the ligands of the Q1, Q2 and Q3.

The metal ion-containing compound of this type includes the one disclosed in the U.S. Patent No. 4,987,049.

When the aforementioned metal ion-containing compound is added, its amount is preferably 0.5 through 20 g/m$^2$, or more preferably 1 through 15 g/m$^2$ with respect to the image receiving layer.

Use of a mold releasing agent is preferred for the image receiving layer. The effective mold releasing agent is preferred to have compatibility with the binder used. To put it more specifically, such an agent typically includes modified silicone oil and modified silicone polymer. For example, it can be exemplified by amino modified silicone oil, epoxy modified silicone oil, polyester modified silicone oil, acryl modified silicone oil and urethane modified silicone oil and the like. Of these, polyester modified silicone oil is advantageous in that it prevents fusion with ink sheet, but does not affect the "secondary processability" of the image receiving layer. The secondary processability refers to the possibility of writing with a felt-tippled pen or the possibility of lamination that may create a problem when protecting a produced image. Other effective mold releasing agents include fine grains of silica and others. When there is no problem with the secondary processability, use of a curable silicone compound is also effective in preventing fusion. The ultraviolet curable silicone and reaction curable silicone are available, and are expected to provide great mold releasing effects.

The image receiving layer of the present invention can be manufactured as follows: A coating solution for the image receiving layer is prepared, and the coating solution for the image receiving layer is applied on the surface of the aforementioned support member. Then it is dried to get the image receiving layer.

The thickness of the image receiving layer formed on the surface of the support member is generally 1 through 50 µm, preferably about 2 through 10 µm.

<Writing layer>

The second support member can be provided with a writing layer for forming an information carrying member. The writing layer can be formed by a binder and various types of additives.

The writing layer can be formed by a binder and various types of additives.

The writing layer is used to write on the reverse side of the ID card. At least one layer is necessary in order to provide the writing layer with writability. It is preferred that the writing layer should be made of one through five layers. This writing layer can be made of inorganic fine powder and porous substance, for example. The porous substance includes silica (sedimentation or gel type), talc, karyon, clay, alumina white, diatomaceous earth, titanium oxide, calcium carbonate and barium sulfate, for example. One of the aforementioned porous substance, or a combination of two or more can be used as the porous substance. The porous substance can be included, without any particular restriction.

Further, a binder can be used. For example, it is possible to use ceramic, rosin and its derivatives, cellulose nitrate and cellulose derivative, polyamide resin, polyacrylate resin, polyvinyl chloride resin, polyvinyl acetate resin, polystyrene resin, petroleum resin, cyclized rubber, chlorinated rubber, chlorinated polypropylene, urethane resin, epoxy resin, polyester resin, acrylic resin, vinyl chloride, vinyl chloride-vinyl acetate copolymer, butyral resin, vinylidene chloride and water-soluble resin. It is also possible to use the ultraviolet curable resin containing the prepolymer that is cured by ultraviolet rays. The copolymeric compound used therefore includes polyol acrylate, polyesteracrylate, epoxy acrylate, urethane acrylate and alkyd acrylate. Of these, polyester resin, polyacrylate resin, polyvinyl chloride resin, polyvinyl acetate resin, polyamide resin and polystyrene resin are preferably employed.

It is also possible to use one of the aforementioned compounds or a mixture of two compounds or more. The grain size of the porous substance is 1 through 10 µm. The porous substance preferably has an average grain size of 1 through 8 µm. The weight ratio of the porous substance is preferably 20 through 100 wt% relative to 100 wt% resin in terms of solid ratio. Wax, surface active agent or solvent and water may be contained as other additives.

The thickness of the writing layer is preferably 5 through 40 µm, more preferably 5 through 30 µm. When the aforementioned writing layer is to be formed, it is possible to an adhesive layer to improve the degree of adhesion as a support member or a cushioning layer to improve writability, if required.

[Format printing layer (card obverse/reverse side printing layer)]

In the present invention, an image carrier layer containing format printing information can be provided on the image carrier layer or writing layer.

The "image carrier layer containing format printing information" refers to the information carrying member where identification information and bibliographical information are recorded and at least one is selected from many items is provided. To put it more specifically, it represents the ruled line, company name, card name, cautionary notes, telephone number of the originating organization, etc.

To protect against forgery by visual inspection, water-mark printing, hologram, fine-line printing can be used in the format printing layer of the present invention. The forgery/alteration preventive layer can be selected appropriately according to the printed matter, hologram, barcode, matte pattern, fine-line, background pattern and concavo-convex pattern. This layer can be provided on either the first sheet member or second sheet member, or either the image carrier layer or writing layer, from the visible light absorbing coloring material, ultraviolet absorber, infrared absorber, fluorescent whitening agent, glass deposited layer, bead layer, optical change element layer, pearl ink layer, phosphorus flake pigment layer, IC concealing layer and water-mark printing layer.

The information carrying member formed by format printing can be produced by commonly used ink listed in the "Planographic printing technology", "A compendium of new printing technology", "Offset printing technology", "An Illustrated guide to prepress processing and printing" by the Japan Association for Printing technologies. Carbon and other ink, in addition to photocurable ink, oil-soluble ink and solvent type ink are used for the formation.

In the printing layer that can be used for format printing layer according to the present invention, typical examples of the binder resin include activated light curable resin, methyl polymethacrylate resin, styrene resin such as polystyrene, vinyl chloride resin such as polyvinyl chloride, vinylidene chloride resin such as polyvinylidene chloride, polyester resin such as polyethylene terephthalate, cellulose resin such as cellulose acetate, polyvinyl acetal resin such as polyvinyl butyral, epoxy resin, amide resin, urethane resin, melamine resin, alkyd resin, phenol resin, fluorine resin, silicone resin, polycarbonate, polyvinyl alcohol, casein and gelatine. In the present invention, use of a light curable resin layer is preferred. More preferable is the use of a printing ink layer containing a composition containing:

25 through 95 wt% of a binder component composed of one or more types of monomers or oligomers having one or more unsaturated linkages; and
1 through 20 wt% of initiator. This is advantageous from the viewpoint of the strength on the surface of the card.

When the activated light curable resin is used, it is cured by the exposure of 100 mj through 500 mj coming from such a light source as a mercury lamp, an ultraviolet lamp and a xenon lamp.

[Electronic part material for electronic parts mounted ID card]

(Electronic parts)

The electronic parts refer to the information recording members. To put it more specifically, they are represented by the IC chip for electrically storing the information of the user of the aforementioned electrical card, and the coil-like antenna body connected to this IC chip. The IC chip is a memory alone, or a memory plus microcomputer or the like. If required, the electronic parts may contain a condenser. The present invention is not restricted thereto; there is no restriction only if the electronic parts are those required for the information recording medium.

The IC contains an antenna coil. When an antenna pattern is provided, a coil formed by a copper winding and a conducting paste such as silver paste printed on an insulating substrate in a coil-like form, and a coil formed by etching such a metal foil as copper foil are used. In the present invention, use of a coil formed by a copper winding is preferred from the viewpoint of communications. If required, it may be covered with a resin, insulating layer or the like.

The circuit pattern containing the antenna coil is preferably of a winding type. If required, electrical connection in a separate process is also possible in order to avoid short circuiting with the coil pattern at some midpoint. The number of the turns of the antenna coil is preferably 2 through 10. A thermoplastic film such as polyester is used as a printed circuit board. When heat resistance is further required, use of polyimide is advantageous. A method of using the conducting adhesive (EN-4000 series by Hitachi Chemical Co., Ltd., XAP series by Toshiba Chemical Co., Ltd.) such as silver paste, copper paste and carbon paste or anisotropic conducting film (anisolm by Hitachi Chemical Co., Ltd.) and a method of using solder jointing and ACF jointing (anisotropic conductive film jointing) are known for connection between the IC chip and antenna pattern. Either of these methods can be utilized.

The parts including the IC chip are placed at a predetermined position in advance and are filled with resin. This may cause the joints to be removed by the shearing force resulting from a flow of the resin, or may cause the surface smoothness to be deteriorated by the resin flow and cooling. This may lead to insufficient stability. To solve this problem, a resin layer is formed on the circuit board in advance, and parts are sealed into this resin layer. Consequently, these electronic parts, porous resin film, porous foamed resin film, flexible resin sheet, porous resin sheet or non-woven fabric in a sheet form is preferably used. For example, a method disclosed in the Japanese Patent Tokuganhei 11-105476 can be adopted.

The non-woven sheet member is exemplified by a meshed fabric including a non-woven fabric, plain fabric, twilled fabric and satin fabric. Further, fabrics having a pile such as moquette, plush velour, seal, velvet and suede are available. The material includes a fiber comprising a combination of one or more of the substances selected from the following: polyamide derivatives such as nylon 6, nylon 66 and nylon 8; polyester derivatives such as polyethylene terephthalate, polyolefin derivatives such as polyethylene, polyvinyl alcohol derivatives, polyvinylidene chloride derivatives, polyvinyl chloride derivatives, acryl derivatives such as polyacrylonirile, acrylamide and methacrylic amide; polyvinylidene cyanide derivatives, polyfluoroethylene derivatives, polyurethane derivatives and other synthetic resin similar to them; silk, cotton, wool, cellulose derivatives, cellulose ester derivatives and other natural fibers similar to them; regenerated fiber (rayon, acetate) and aramid fiber. These fiber materials preferably include polyamide derivatives such as nylons 6 and 66, acryl derivatives such as polyacrylonirile, acrylamide and methacrylic amide, polyester resin such as polyethylene terephthalate, cellulose derivatives as regenerated fibers, rayon and acetate as cellulose ester derivatives, and aramid fiber.

The IC chip is less strong to point pressure. Consequently, a reinforcing plate is preferably provided in the vicinity of the IC chip.

The overall thickness of the electronic parts is preferably 10 through 500 μm, more preferably 10 through 450 μm, and further more preferably 10 through 350 μm.

(Method of providing the first sheet member and second sheet member, and method for mounting the electronic parts)

Since electronic parts are installed between the first sheet member and second sheet member in the present invention, the commonly known manufacturing method includes a thermolaminating method, an adhesive laminating method and an injection molding method. Any method may be used for lamination. Before or after bonding the first sheet member with the second sheet member, formation can be achieved by any of the offset printing, gravure printing, silk printing, screen printing, intaglio printing, letterpress printing, inkjet printing, sublimation transfer method, electrophotographic method and hot melt method.

In the method for manufacturing the IC-mounted card substrate of the present invention, the lamination method and coating method are disclosed in the Japanese Patents Tokkai 2000-036026, Tokkai 2000-219855, Tokkaihei 2000-211278, Tokkaihei 2000-219855, Tokkaihei 10-316959 and Tokkaihei 11-5964.

The method for manufacturing the IC-mounted card substrate of the present invention comprises:

a process of forming an electronic parts holding member by applying a bonding member, being a solid or viscous substance at least at a normal temperature, softened when heated, to the electronic parts of a card;

a process of arranging this electronic parts holding member on a member of the substrate;

a process of arranging a surface member so as to cover the electronic parts holding member located on the member of the substrate; and

a process of laminating the member for the substrate, electronic parts holding member and surface member under a predetermined pressure and temperature, whereby lamination is carried out.

The bonding member as a solid or viscous substance, which is softened when heated, is preferably provided by forming the adhesive itself in a seat-like shape. The adhesive itself is preferably melted at an elevated or normal temperature and the bonding member is laminated by injection molding. To reduce the thermal deformation of the support member in the present invention, use of a low-temperature adhesive is preferred. More preferably used are the reaction sensitive adhesive and hot melt adhesive. Still more preferably used is the reaction sensitive hot melt adhesive.

The reaction sensitive hot melt adhesive refers to the photocurable adhesive, moisture curable adhesive or elastic epoxy adhesive. For example, the reaction sensitive hot melt adhesive of moisture curable material is disclosed in the Japanese Patent Tokkai 2000-036026, Japanese Patent Tokkaihei 2000-219855, Japanese Patent Tokkai 2000-211278, Japanese Patent Tokkai 2000-219855 and Japanese Patent Tokkai 2000-369855. The photocurable adhesive is disclosed in the Japanese Patent Tokkaihei 10-316959 and the Japanese Patent Tokkaihei 11-5964.

An example of the reaction sensitive moisture curable adhesive is found in the adhesive wherein the urethane polymer containing an isocyanate group as a major component is located on the terminal of the molecule, and the isocyanate group forms a crosslinking structure through reaction with water. The reaction type adhesive that can be used in the present invention includes the TE030 and TE100 by Sumitomo 3M Co., Ltd., Highbon 4820 by Hitachi Chemical Polymer Co., Ltd, Bond Master 170 Series by Kanebo NSC Co., Ltd., Macroplast QR 3460 by Henkel Inc. and Esdyne 9631 by Sekisui Chemical Co., Ltd. In the present invention, use of resins having a different modulus of elasticity is preferred. If resins having different modulus of elasticity are used, the resin having a high modulus of elasticity serves as a framework, and the resin having a low modulus of elasticity flows into a hole during lamination of a support member, thereby providing a high level of smoothness. This is preferred.

Any one of these adhesives can be used.

The film thickness of the adhesive including the thickness of electronic parts is preferably 10 through 600 μm, more preferably 10 through 500 μm, and still more preferably 10 through 450 μm.

To improve the level of surface smoothness of the substrate and the level of close adhesion of the electronic parts between the first sheet member and second sheet member, the process of providing heat and pressure is preferably applied. Use of the vertical press method, lamination method or caterpillar method is preferred in the production. With consideration given to the possible cracking of the IC parts, a roller, forming a near-linear contact, that may yield undue force due to a slight deviation, should not be used. Plane press type is preferably used. Heating is carried out at a temperature of 10 through 120 degrees Celsius, preferably 30 through 100 degrees Celsius. The pressure is preferably 0.05 through 300 kgf/cm$^2$, more preferably 0.05 through 100 kgf/cm$^2$. If the pressure is higher beyond this range, the IC chip will be damaged. The time for applying heat and pressure is preferably 0.1 through 180 sec., more preferably 0.1 through 120 sec. if a longer time is used, production efficiency will be reduced.

In the method for manufacturing an electronic card of the present invention, the aforementioned electronic parts holding member is used. In the process of lamination, the substrate member, electronic parts holding member and surface member are laminated at a specified pressure and temperature. This arrangement allows the electronic parts holding member itself to be used as an adhesive, and therefore the substrate member, its electronic parts holding member and surface substrate can laminated in such a way as to ensure a high degree of reproducibility.

The laminated sheet formed in a continuous sheet according to the aforementioned adhesive lamination method or resin injection method or the continuous coating LAMIROLL are left to stand for the time required for curing of the adhesive. After that, a recognition-identification image and a bibliographical item may be recorded. The card may be formed into a specified size thereafter. In the case of formation into a specified card size, punching or trimming method is mainly selected, and an electronic parts mounted ID card is produced.

<Card substrate production method>

The following describes an example of manufacturing an electronic parts mounted IC card: Before manufacturing the IC card, an applicator is used to coat a hot melt agent on the sheets on front and back to a predetermined thickness. A conventional coating method such as a roller method, T-die method and dies method in this process of coating. When coating in a stripe form in the present invention, the T-die slit is provided with an opening intermittently, in some case, but the present invention is not restricted to this method. To form a concavo-convex pattern on the surface of the adhesive in the present invention, the adhesive surface coated in the aforementioned manner can be pressed by an embossing roll. The upper and lower sheets coated with the adhesive are mounted in position. Before they are mounted, the coated adhesive can be heated in advance by a heater or the like. To avoid entry of bubbles at the time of lamination, vacuum pressing can be applied. After lamination by a press or the like, punching is performed to get a predetermined shape, or trimming is carried out to get a card form, whereby a card is produced. When a reaction sensitive adhesive is used as the adhesive, the material is trimmed in the form of a card after curing for a predetermined period of time. To promote curing, it is effective to open an hole around the card size of the laminated sheets so that water required for reaction can be supplied.

<Method for manufacturing an electronic parts mounted IC card substrate>

The following describes an example of the method for manufacturing an electronic parts mounted IC card substrate in the present invention: Before manufacturing the IC card, an applicator is used to coat a hot melt agent on the sheets on front and back to a predetermined thickness. A conventional coating method such as a roller method, T-die method and dies method in this process of coating. When coating in a stripe form in the present invention, the T-die slit is provided with an opening intermittently, in some case, but the present invention is not restricted to this method. To form a concavo-convex pattern on the surface of the adhesive in the present invention, the adhesive surface coated in the aforementioned manner can be pressed by an embossing roll. An IC member is mounted between the upper and lower sheets coated with the adhesive. Then the IC member mounted between the upper and lower sheets is pressed for a predetermined period of time by a press heated to the temperature required for lamination of the adhesive. Alternatively, sheets may be rolled by a roll while being conveyed in a thermostatic layer having a predetermined temperature, instead of be rolled by a press. To avoid entry of bubbles at the time of lamination, vacuum pressing can be applied. After lamination by a press or the like, punching is performed to get a predetermined shape, or trimming is carried out to get a card form, whereby a card is produced. When a reaction sensitive adhesive is used as the adhesive, the material is trimmed in the form of a card after curing for a predetermined period of time. To promote curing, it is effective to open an hole around the card size of the laminated sheets so that water required for reaction can be supplied.

(Image forming method)

The ID card substrate or electronic parts mounted ID card substrate of the present invention can be provided with an image element, in addition to format printing and recording of identification information on the writing layer. It is the image on the substrate provided with at least one image selected from a recognition-identification image such as a face image and an attribute information image, or the image formed on the printed side.

In the case of a face image, the full-color image having a gradation is produced, for example, by the sublimation heat transfer method or silver halide color photographic method. The text information is made of a binary image. It is produced by fusion thermal transfer recording method, sublimation heat transfer method, silver halide color photographic method, electrophotographic method, inkjet method or re-transfer method. In the present invention, a recognition-identification image such as a face image and an attribute information image are produced preferably by the fusion thermal transfer recording method, sublimation heat transfer method, and inkjet method, more preferably by sublimation heat transfer method.

The attribute information represents personnel information on name, address, the date of birth and qualification. The attribute information is normally recorded as text information, generally by the fusion thermal transfer recording method. It can be produced by any one of the inkjet method, sublimation transfer method, electrophotographic method and hot melt method.

<Sublimation image formation method>

The ink sheet for sublimation transfer recording can be composed of a support member and a sublimable pigment-containing ink layer formed thereon.

- Support member -

The support member preferably has excellent dimensional stability and resistance to heat during recording by a thermal head.

- Sublimable pigment-containing ink layer -

The sublimable pigment-containing ink layer basically contains a sublimable pigment and binder.

The aforementioned sublimable pigment includes cyan, magenta and yellow pigments.

The aforementioned cyan pigment includes the naphtoquinone, anthraquinone and azomethine pigments disclosed in the Japanese Patent Tokkaisho 59-78896, the Japanese Patent Tokkaisho 59-227948, the Japanese Patent Tokkaisho 60-24966, the Japanese Patent Tokkaisho 60-53563, the Japanese Patent Tokkaisho 60-130735, the Japanese Patent Tokkaisho 60-131292, the Japanese Patent Tokkaisho 60-239289, the Japanese Patent Tokkaisho 61-19396, the Japanese Patent Tokkaisho 61-22993, the Japanese Patent Tokkaisho 61-31292, the Japanese Patent Tokkaisho 61-31467, the Japanese Patent Tokkaisho 61-35994, the Japanese Patent Tokkaisho 61-49893, the Japanese Patent Tokkaisho 61-148269, the Japanese Patent Tokkaisho 62-191191, the Japanese Patent Tokkaisho 63-91288, the Japanese Patent Tokkaisho 63-91287 and the Japanese Patent Tokkaisho 63-290793.

The aforementioned magenta pigment includes the anthraquinone, azo and azomethine pigments disclosed in the Japanese Patent Tokkaisho 59-78896, the Japanese Patent Tokkaisho 60-30392, the Japanese Patent Tokkaisho 60-30394, the Japanese Patent Tokkaisho 60-253595, the Japanese Patent Tokkaisho 61-262190, the Japanese Patent Tokkaisho 63-5992, the Japanese Patent Tokkaisho 63-205288, the Japanese Patent Tokkaisho 64-159, and the Japanese Patent Tokkaisho 64-63194.

The aforementioned yellow pigment includes the methine, azo, quinophthalone and anthraisothiazole pigments disclosed in the Japanese Patent Tokkaisho 59-78896, the Japanese Patent Tokkaisho 60-27594, the Japanese Patent Tokkaisho 60-31560, the Japanese Patent Tokkaisho 60-53565, the Japanese Patent Tokkaisho 61-12394, and the Japanese Patent Tokkaisho 63-122594.

The particularly preferred sublimable pigment includes the azomethine pigment obtained by the reaction of coupling between a compound having an activated methylene group of open chain or closed chain with the oxidant of p-phenylene derivative or the oxidant of p-aminophenol derivative; and the indoaniline pigment obtained by the reaction of coupling between the compound having an activated methylene group of open chain or closed chain with the oxidant of the phenol or naphthol derivative or p-phenylene diamine derivative or the oxidant of the p-aminophenol derivative.

When a metal ion containing compound is contained in the image receiving layer, the sublimable pigment capable of forming a chelate by reaction with the metal ion containing compound is preferably built into the sublimable pigment-containing ink layer. The sublimable pigment capable of forming a chelate includes the cyan, magenta and yellow pigments capable of forming at least two chelates disclosed in the Japanese Patent Tokkaisho 59-78893, the Japanese Patent Tokkaisho 59-109349, the Japanese Patent Tokuganhei 2-213303, the Japanese Patent Tokuganhei 2-214719, the Japanese Patent Tokuganhei 2-203742.

The sublimable pigment capable of forming a chelate can be expressed by the following general formula:

$$X1 - N = N - X2 - G$$

where X1 in the formula denotes an aromatic carbon ring, wherein at least one ring is composed of 5 through 7 atoms, or a collection of atoms required to complete formation of a heterocyclic ring; it refers to a carbon atom wherein at least one of the adjacent positions of the carbon atom connected in azo-coupling has been substituted by a nitrogen atom or chelated group. X2 denotes an aromatic carbon ring, wherein at least one of the rings is composed of five through seven atoms.

The sublimable pigment contained in the aforementioned sublimable pigment-containing ink layer can be any one of the yellow, magenta and cyan pigments if the image to be formed is monochromatic. Depending on the color tone of the image to be formed, any two or more of the aforementioned three pigments or other sublimable pigment may be contained. The amount of the sublimable pigment is normally 0.1 through 20 grams per square meter of a support member, preferably 0.2 through 5 grams. An ink sheet support member may have an undercoated layer for improving the adhesion with the binder and for avoiding transfer of the pigment to the support member side of the ink sheet or dyeing of the support member side by the pigment. Further, the reverse side of the ink sheet support member (the side opposite to the ink layer) may be provided with a sticking preventive layer in order to avoid fusion or sticking of the head to the ink sheet bundle and to prevent the sublimation transfer ink sheet from being wrinkled. The aforementioned overcoating layer, undercoating layer and sticking preventive layer normally have a thickness of 0.1 through 1 μm.

<Hot melt image forming method>

(Hot melt ink layer)

The ink sheet for hot melt transfer recording can be composed of a support member and a hot melt containing ink layer formed thereon. The hot melt ink layer are composed of a hot melt compound, thermoplastic resin and coloring agent. Similarly to the case of the in sheet for sublimation transfer recording, a sticking preventive layer can be provided in order to prevent the melt transfer recording ink sheet from being wrinkled. The aforementioned overcoating layer, undercoating layer and sticking preventive layer normally have a thickness of 0.1 through 1 μm.

The hot melt compound normally used for the hot melt ink layer of the ink sheet for hot melt transfer recording of this type can be used freely as the aforementioned hot melt compound. To put it more specifically, such a hot melt compound can be exemplified by the thermoplastic resins of low molecular weight, including a polystyrene resin, acryl resin, styrene-acryl resin, polyester resin and polyurethane resin, as well as the substances listed in the 8th line on the upper left-hand section through the 12th line on the upper-left section of page 4 of the Japanese Patent Tokkaisho 63-193886. In addition, rosin, hydrogenated rosin, polymerized rosin, rosin modified glycerin, rosin modified maleic acid resin, rosin modified polyester resin, rosin modified phenol resin, ester gum, and other rosin derivatives similar to them, as well as phenol resin, terpene resin, ketone resin, cyclopentadiene resin and aromatic hydrocarbon resin.

The hot melt compound is normally preferred to have a molecular weight of 5,000 or more without exceeding 10,000 and a melting point or softening point of 50 through 150 degrees Celsius. One of the hot melt compounds may be used independently or two or more of them may be used in combination. The aforementioned thermoplastic resin used as the component of the hot melt ink layer are found in great varieties, including the resin used on the hot melt ink layer of the hot melt transfer recording ink sheet of this type. It can be exemplified by the substances listed on the upper right-hand section of page 4 through the 18th line on the upper-left section of page 5 of the Japanese Patent Tokkaisho 63-193886. The aforementioned coloring agent used as the component of the hot melt ink layer includes the one used on the hot melt ink layer of the hot melt transfer recording ink sheet of this type. It can be exemplified by the inorganic pigments and organic pigments as well as the organic dye listed in the 3rd line on the upper left-hand section through the 15th line of page 5 of the Japanese Patent Tokkaisho 63-193886.

The coloring agents of this type may be used independently or two or more of them may be used in combination, as required. Additives other than those mentioned above can be added to the aforementioned hot melt ink layer, as required, without sacrificing the object of the present invention. For example, this hot melt ink layer may be impregnated with a fluorine based surface active agent. The presence of the fluorine based surface active agent prevents the hot melt ink layer from being blocked. Further, addition of the organic and inorganic fine grains and non-compatible resins is effective in improving the sharpness of the image containing the text information, viz., delimitation of the character boundary. The film thickness of the hot melt ink layer is normally 0.6 through 5.0 μm, and in particular preferably 1.0 through 4.0 μm. This hot melt ink layer can be coated according to the method (organic solvent method) where coating is performed with the forming components dispersed or dissolved in organic solvent, or according to the method (hot melt coating method) where coating is performed by putting thermoplastic resin in a softened or molten state through heating. Preferably, coating is performed using the emulsion obtained by dispersing or dissolving the forming component in water and organic solvent or the solvent. The total content of the layer forming component in the coating solution used for coating the hot melt ink layer is normally set at 5 through 50 wt%. The conventional coating method can be utilized. The coating method includes the wire bar method, squeeze coating method and gravure coating method. The hot melt ink layer is preferably composed of at least one layer. For example, it can be formed by laminating two or more hot melt ink layers different from each other in the type and content of the coloring agent or in the mix proportion of thermoplastic resin and hot melt compound.

<Forming a gradation information containing image>

To form a gradation information containing image, the heat diffusive pigment containing ink layer of the sublimation transfer recording ink sheet and the image receiving layer are placed one on top of the other, so as to ensure an image-wise supply of thermal energy to the heat diffusive pigment containing ink layer and image receiving layer. Then the heat diffusive pigment in the heat diffusive pigment containing ink layer is evaporated or sublimated in the amount corresponding to the thermal energy supplied during the process of this image formation, and is moved to the image receiving layer. As a result of reception, gradation information containing image is formed on the image receiving layer.

Generally, a thermal head serves as a heat source of thermal energy. Further, a laser beam, infrared flash or hot recording pen can be utilized. When a thermal head is used as a heat source of thermal energy, the thermal energy supplied can be changed continuously or in multiple steps by modulating the voltage or width of the pulse applied to the thermal head. When a laser beam is used to supply the thermal energy, the thermal energy supplied can be changed by adjusting the amount of laser beam and the area of irradiation.

In this case, to facilitate absorption of laser beams, a laser beam absorbing material (e.g. carbon black and near-infrared light absorbing substance in the case of a semiconducting laser) is preferably placed in the vicinity of the ink layer. When using a laser beam, the sublimation transfer recording ink sheet and the image receiving layer of the substrate is preferably placed sufficiently close to each other.

Using a dot generator with a built-in acousto-optic device makes it possible to supply a thermal energy conforming to the size of the dot. When using an infrared flash lamp, heating is preferably provided through colored layer such a black layer, similarly to the case of using a laser beam. Alternatively, heating may be provided through a black pattern or the like that represents the contrast of the image on a continuous basis or a dot pattern. Alternatively, a colored layer having a black side and a negative pattern corresponding to the negative of the aforementioned pattern may be combined to provide heating.

Thermal energy may be supplied from the sublimation transfer recording ink sheet and/or the thermal transfer recording image receiving sheet. If higher priority is to be given to the effective use of thermal energy, thermal energy is preferably supplied from the sublimation transfer recording ink sheet. The aforementioned step of thermal transfer recording allows monochromatic image to be recorded on the thermal transfer recording image receiving sheet. If the following method is used, a color image, on the level of a color photo, composed of a combination of various colors, can be obtained: For example, the thermal transfer recording image receiving sheets of yellow, magenta, cyan and, as required, black colors are exchanged sequentially, and thermal transfer is carried out according to each color. This step will provide a color image, on the level of a color photo, composed of a combination of various colors.

The following method is also effective: As described above, sublimation transfer recording ink sheet having the areas separately coated in various colors in advance is used instead of using the sublimation transfer recording ink sheet. In the first place, the yellow area is employed to thermally transfer a separately colored yellow image. Then the magenta area is employed to thermally transfer a separately colored magenta image. This is step is repeated until thermal transfer is carried out sequentially in the order of separately colored images of yellow, magenta, cyan and, as required, black. This method is adopted.

Further, after an image has been formed according to the aforementioned manner, heating may be performed according to the aforementioned method in order to improve the image keeping quality. For example, heating is carried out over the entire image formed surface by the thermal head, using the portion not provided with the heat diffusive pigment containing ink layer of the sublimation transfer recording ink sheet. Alternatively, a new process of heating may be carried out newly, using a heating roll or the like. Further, if the near-infrared light absorbent is contained, a near-infrared flash lamp may be used to expose the image forming surface to light. In any case, any type of a heating means may be used. Since the object is to spread the pigment further inside the image receiving layer, heating is preferably started from the support member side of the image receiving layer. In the present invention, use of a thermal head is preferred.

In the present invention, the image receiving layer of the thermal transfer recording image receiving sheet and the hot melt thermal transfer recording sheet are placed one on top of the other. When an image is formed, a gradation information containing image is preferably formed under a pressure of 0.3 through 0.01 kg/cm$^2$ applied in response to the recording signal at a head temperature of 50 through 500 degrees Celsius, preferably 100 through 500 degrees Celsius, more preferably 100 through 400 degrees Celsius. A more preferable pressure is 0.25 through 0.01 kg/cm$^2$, and a still more preferable pressure is 0.25 through 0.02 kg/mm$^2$.

<Forming a text information containing image>

The hot melt transfer method using the aforementioned hot melt transfer recording ink sheet is not different from the conventional thermal transfer recording method. The following describes the case where a thermal head most typically used as a heat source is employed. In the first place, the hot melt ink layer of the hot melt transfer recording ink sheet and the image receiving layer of the substrate are brought into close contact. If required, thermal pulses are given to the hot melt ink layer by the thermal head, thereby locally heating the hot melt ink layer corresponding to the desired printing or the transfer pattern.

With the rise of temperature, the heated portion of the hot melt ink layer is quickly softened and is transferred to the image receiving surface of the substrate. The non-gradation information containing image that does not require gradation of the text, graphics symbol or ruled line may be formed, prior to formation of the aforementioned gradation information containing image. Alternatively, it may be formed after formation of the gradation information containing image. The text information containing image can also be formed by using the sublimation transfer recording ink sheet.

In the present invention, the image receiving layer of the thermal transfer recording image receiving sheet and hot melt transfer recording sheet are placed one on top of the other. When a text information containing image is formed, a gradation information containing image is preferably formed under a pressure of 0.3 through 0.01 kg/cm$^2$ applied in response to the recording signal at a head temperature of 50 through 500 degrees Celsius, preferably 100 through 500 degrees Celsius, more preferably 100 through 400 degrees Celsius. A more preferable pressure is 0.25 through 0.01 kg/cm$^2$, and a still more preferable pressure is 0.25 through 0.02 kg/mm$^2$.

[Protective layer for information carrying layer and method of forming the same]

Image elements can be provided on the card substrate or the electronic parts mounted IC card substrate of the present invention, in addition to the identification information to be recorded on the format printing and writing layer. In the certification/identification and electronic parts mounted certification/identification card provided with at least one item selected from the certification/identification image (such a face image) and attribute information image, the following image recording medium protective layer material is preferably used in order to improve the card physical strength and light resistance.

From the viewpoint of surface strength and chemical resistance, a photocurable resin layer is preferably used for the aforementioned protective layer material. From the viewpoint of light resistance, an ultraviolet absorber is preferably contained.

In the present invention, an ultraviolet absorber may be added into the photocurable resin layer, as the surface protective layer. It is sufficient only if the surface protective layer containing at least the photocurable resin layer and ultraviolet absorber covers the surface, contained in the layer different from the photocurable resin layer, provided with at least one item finally selected from the certification/identification image and attribute information image.

<Surface protective layer composed of photocurable resin layer>

(Photocurable resin)

To put it more specifically, photocurable image recording medium protective layer material is provided with addition polymerization and ring opening polymerization properties. The addition polymerizable compound can be a radical polymerized compound or a photopolymerized composition (including thermopolymerized composition) disclosed in the Japanese Patent Tokkaihei 7-159983 and Tokkohei 7-31399. A cationic polymerized photocurable material is known as the addition polymerized compound. In recent years, the photocationic polymerized photocurable material sensitized to the long wavelength region in excess of the visible light is disclosed in the Japanese Patent Tokkaihei 6-43633. A composition as a hybrid polymerized photocurable material is disclosed in the Japanese Patent Tokkaihei 4-181944. To put it more specifically, if there is a photocurable resin layer containing any one of the aforementioned cationic initiator, cationic polymerized compound, radical initiator and radical polymerized compound, any photocurable resin layer can be adopted for the purpose of the present invention.

[Radical polymerized initiator]

The radical polymerized initiator is exemplified by:

a triazine derivative disclosed in the Japanese Patent Tokkosho 59-1281, Japanese Patent Tokkosho 61-9621, and Japanese Patent Tokkaisho 60-60104;
an organic peroxide disclosed in the Japanese Patent Tokkaisho 59-1504 and Japanese Patent Tokkaisho 61-243807;

a diazonium compound disclosed in the Japanese Patent Tokkosho 43-23684, the Japanese Patent Tokkosho 44-6413, the Japanese Patent Tokkosho 47-1604, and U.S. Patent No. 3,567,453;

an organic azido compound disclosed in the U.S. Patent No. 2,848,328, U.S. Patent No. 2,852,379 and U.S. Patent No. 2,940,853;

ortho-quinone diazido disclosed in the Japanese Patent Tokkosho 36-22062, Japanese Patent Tokkosho 37-13109, Japanese Patent Tokkosho 38-18015 and Japanese Patent Tokkosho 45-9610;

various types of onium compounds disclosed in the Japanese Patent Tokkosho 55-39162, Japanese Patent Tokkaisho 59-14023 and "Macromolecules", Vol. 10, P. 1307 (1977);

an azo compound disclosed in the Japanese Patent Tokkaisho 59-142205;

a metal allene complex disclosed in the Japanese Patent Tokkaihei 1-54440, European Patent No. 109,851, European Patent No. 126,712, and "Journal of Imaging Science" (J. Imag. Sci.), Vol. 30, P. 174 (1986);

an (oxo)sulfonium organic boron complex disclosed in the Japanese Patent Tokkaihei 5-213861 and Japanese Patent Tokkaihei 5-255347;

titanocene disclosed in the Japanese Patent Tokkaisho 61-151197;

transition metal complex disclosed in "Coordination Chemistry Review", Vol. 84, pp. 85-277) (1988) and Japanese Patent Tokkaihei 2-182701;

2, 4, 5-triaryl imidazole dimer and carbon tetrabromide disclosed in the Japanese Patent Tokkaihei 3-209477; and

a organic halogen compound disclosed in the Japanese Patent Tokkaisho 59-107344.

0.01 through 10 parts by weight of these polymerized initiators are preferably contained with respect to 100 parts by weight of a compound containing an unsaturated linkage of radical polymerizable ethylene.

The photosensitive composition containing radical polymerized compound may contain the radical polymerized initiator commonly used in high molecular synthesis reaction by radical polymerization, as a thermally polymerized initiator of radical polymerized monomer. The thermally polymerized initiator in the sense in which it is used here refers to a compound capable of generating a polymerized radical when supplied with thermal energy.

Such a compound includes:

azobinitrile compound such as 2, 2'-azobisisobutyronitrile and 2, 2'-azobispropionitrile;

organic peroxide ion such as benzoyl peroxide, lauroyl peroxide, acetyl peroxide, perbenzoic acid t-butyl, α-cumylhydroperoxide, di-t-butylperoxide, diisopropylperoxy dicarbonate, t-butylperoxy isopropyl carbonate, peroxy acids, alkylperoxy carbamate, nitrosoarylacylamine;

inorganic peroxide such as potassium persulfide, ammonium persulfide and potassium perchlorate;

an azo or diazo compound such as diazo aminobenzene, p-nitrobenzene diazonium, azobis substitution alkane, diazo thioether and aryl azosulfon.

It further includes nitrosophenyl urea, tetramethylthiuram disulfide, diaryl disulfide, dibenzoil disulfide, tetraalkylthiuram disulfide, dialkyldisulfide xanthogenate, aryl sulfinic acid, aryl alkyl sulfone and 1-alkane sulfinic acid.

The compounds particularly preferable among these compounds have excellent stability at a normal temperature and a high decomposition speed during heating, and become colorless when decomposed. Such compounds include benzoyl peroxide and 2, 2'-azobisisobutyronitrile. In the present invention, one thermally polymerized initiator or a combination of two or more of these thermally polymerized initiators can be used. Further, the preferable amount of the thermally polymerized initiator in a thermally polymerized composition is 0.1 through 30 wt%, and the more preferable amount is 0.5 through 20 wt%.

[Radical polymerized photocurable resin]

The radical polymerized compound contained in the radical polymerized photocurable resin contains a normal photo-polymerized compound and thermal polymerized compound. The radical polymerized compound is a compound containing an unsaturated linkage of radical polymerizable ethylene. Any compound can be used if it contains at least one unsaturated linkage of radical polymerizable ethylene in the molecule. The monomer, oligomer, polymer and others having such a chemical form are included therein. Only one radical polymerized compound can be used, or two or more radical polymerized compounds in a desired proportion can be used to improve the intended object.

The compound having an unsaturated linkage of radical polymerizable ethylene can be exemplified by acrylic acid, methacrylic acid, itaconic acid, crotonic acid, isocrotonic acid, maleic acid, other unsaturated carboxylic acids similar to them, their salts, ester, urethane, amide, anhydride, acrylonitrile, styrene, various unsaturated polyester, unsaturated polyester, unsaturated polyamide, unsaturated urethane, and such other radical polymerized compounds. To put it more specifically, it includes:

acryl derivatives such as 2-ethylhexylacrylate, 2-hydroxyethylacrylate, butoxyethylacrylate, carbitol acrylate, cyclohexylacrylate, tetrahydro furfurylaacrylate, benzylacrylate, bis(4-acryloxy polyethoxy phenyl)propane, neopentyl glycol diacrylate, 1,6-hexandiol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerithritol triacrylate, pentaerithritol tetraacrylate, dipentaerithritol tetraacrylate, trimethyrol propane triacrylate, tetramethyrol methane tetraacrylate, oligoester acrylate, N-methyrol acrylamide, diacetone acrylamide, and epoxy acrylate;
methacryl derivatives such as methyl methacrylate, n-butyl methacrylate, 2-ethylhexyl methacrylate, lauryl methacrylate, allyl methacrylate, glycidyl methacrylate, benzyl methacrylate, dimethyl aminomethyl methacrylate, 1,6-hexane diol dimethacrylate, ethylene glycol dimethacrylate, triethylene glycol dimethacrylate, polyethylene glycol dimethacrylate, polypropylene glycol dimethacrylate, trimethyrol ethane trimethacrylate, trimethyrol propane trimethacrylate, and 2,2-bis(4-methacryloxy polyethoxyphenyl)propane; and
derivatives of allyl compound such as allyl glycidyl ether, diallyl phthalate and triallyl trimellitate.

To put it more specifically, it includes the commercially available products listed in "Crosslinking Agent Handbook" edited by YAMASHITA Shinzo (1981, Taiseisha Co., Ltd.); "UV.EB Curing Handbook (Part: Material)" edited by KATO Kiyomi (1985, High Polymer Publishing Association); "Application of UV.EB Curing Technology and its Market" edited by Ladtec Research Association, P. 79 (1989, C.M.C); and TAKIYAMA Eichiro: "Polyester Resin Handbook", (1988, Nikkan Kogyo Shimbun Ltd.). It also includes the radical polymerized compound, crosslinking monomer, oligomer and polymer. The amount of the aforementioned radical polymerized compounds to be added in the radical polymerized composition is preferably 1 through 97 wt%, more preferably 30 through 95 wt%.

[Acid cross-linked photocurable resin]

The crosslinking agent used in the acid cross-linked composition of the present invention is a compound that is subjected to crosslinking reaction due to the acid generated from a specific compound of the present invention when exposed to activated light or radiation. The crosslinking agent preferably used in the present invention is a compound that contains two or more hydroxy methyl groups, alkoxy methyl groups, epoxy groups or vinyl ether groups inside the molecule. It is preferably a compound where these crosslinked functional groups are directly with the aromatic ring. To put it more specifically, it includes methyrol melamine, resol resin, epoxidated novolak resin and urea resin. Further, preferable compounds are described in the "Crosslinking Agent Handbook" (YAMASHITA Shinzo and KANEKO Tohsuke, Taiseisha Co., Ltd.). Particularly, the phenol derivative containing two or more hydroxymethyl groups or alkoxy methyl groups inside the molecule is preferably characterized by excellent strength of the image section when an image has been formed. A specific substance of such a phenol derivative is a resol resin.

However, these crosslinking agents are instable to heat. They have poor storage stability after the image recording medium has been produced. By contrast, excellent storage stability is provided by the phenol derivative, containing two or more hydroxymethyl groups connected with the benzene ring inside the molecule, having a molecular weight of 1,200 or less. It is most preferably used in the present invention. The alkoxy methyl group is preferred to have a carbon number of 6. To put it more specifically, the preferred groups are a methoxy methyl group, ethoxy methyl group, n-propoxy methyl group, isopropoxy methyl group, n-butoxy methyl group, isobutoxy methyl group, sec-butoxy methyl group and t-butoxy methyl group. Further, the alkoxy-substituted alkoxy methyl group such as a 2-methoxy ethoxy methyl group and 2-methoxy-1-propoxy methyl group is most preferable. To put it more specifically, preferable compounds are those listed in the Japanese Patent Tokkaihei 6-282067, Japanese Patent Tokkaihei 7-64285, EP632 and 003A1.

Other crosslinking agents preferably used in the present invention are aldehyde and ketone compounds. The compound having two or more aldehyde or ketone groups in the molecule are preferred.

In the present invention, the amount of the crosslinking agent to be added in the overall image recording medium solid is 5 through 70 wt% preferably 10 through 65 wt%. If the amount of the crosslinking agent to be added is less than 5 wt%, the film strength of the image section will be reduced when an image has been recorded. If it is over 70 wt%, the storage stability will be adversely affected. These crosslinking agents can be used independently or two or more agents can be used in combination.

[Cationic polymerized initiator]

The cationic polymerized initiator is preferred as an initiator. To put it more specifically, it includes an aromatic onium salt. The aromatic onium salt is:

the salt of Group Va element in the Periodic Table, e.g. phosphonium salt (e.g. triphenylphenacyl phosphonium hexafluoro phosphate);
the salt of Group VIa element in the Periodic Table, e.g. sulfonium salt (e.g. triphenyl sulfonium tetrafluoro borate, triphenyl sulfonium hexafluoro phosphate, tris(4-thiomethoxy phenyl) hexafluoro phosphate, sulfonium and triphenyl sulfonium hexafluoro antimonate); and
the salt of the Group VIIa element; e.g. iodoniumu salt (e.g. diphenyl iodonium chloride).

Use of such an aromatic onium salt as a cationic polymerized initiator in the polymerization of the epoxy compound is disclosed in the U.S. Patent No. 4,058,401, U.S. Patent No. 4,069,055, U.S. Patent No. 4,101,513 and U.S. Patent No. 4,161,478.

A preferable cationic polymerized initiator is exemplified by the sulfonium salts in the Group VIa element. From the viewpoint of the ultraviolet curability and the storage stability of the ultraviolet curable composition, triallyl sulfonium hexafluoro antimonate is preferable. Further, it is possible to use the photo-polymerization initiators given on pages 39 through 56 of the Photopolymer Handbook (edited by Photopolymer Forum, Industrial Research Committee, 1989), and the compounds disclosed in the Japanese Patent Tokkaisho 64-13142 and Japanese Patent Tokkaihei 2-4804.

[Cationic polymerized photocurable resin]

As a cationic polymerized compound, the ultraviolet curable prepolymer or monomer of the type (mainly epoxy) that is turned into a high molecular compound by cationic polymerization includes a prepolymer containing two or more epoxy groups in each molecule. Such a prepolymer includes aliphatic ring type polyepoxides, polyglycidyl esher of polybasic acid, polyglycidyl ether of polyvalent alcohol, polyglycidyl ether of polyoxyalkylene glycol, polyglycidyl ether of aromatic polyol, hydrogenated compounds of polyglycidyl ether of aromatic polyol, urethane polyepoxy compounds, and epoxidized polybutadiene. These prepolymers can be used independently or two or more of them can be used in combination.

The preferable amount of the prepolymer containing two or more epoxy groups in one molecule is 70 wt% or more. In addition to the examples given above, the cationic polymerized compound contained in the cationic polymerized composition includes (1) styrene derivatives, (2) vinyl naphthalene derivatives, (3) vinyl ether and its related substances and (4) N-vinyl compounds, which are listed below:

(1) Styrene derivative
Styrene, p-methyl styrene, p-methoxy styrene, $\beta$-methyl styrene, p -methyl-$\beta$-methyl styrene, $\alpha$-methyl styrene and p-methoxy-$\beta$-methyl styrene, etc.
(2) Vinyl naphthalene derivatives
1-vinyl naphthalene, $\alpha$-methyl-1-vinyl naphthalene, $\beta$-methyl-1-vinyl naphthalene, 4-methyl-1-vinyl naphthalene, 4-methoxy-1-vinyl naphthalene, etc.
(3) Vinyl ether and its related substances
Isobutyl vinyl ether, ethyl vinyl ether, phenyl vinyl ether, p-methyl phenyl vinyl ether, p-methoxy phenyl vinyl ether, $\alpha$-methyl phenyl vinyl ether, $\beta$-methyl isobutyl vinyl ether, $\beta$-chloroisobutyl vinyl ether, etc.
(4) N-vinyl compounds N-vinyl carbazole, N-vinyl pyrrolidone, N-vinyl indole, N-vinyl pyrrole, N-vinyl phenothiazine, N-vinyl acetoanilide, N-vinyl ethylacetoamide, N-vinyl succinimide, N-vinyl phthalimide, N-vinyl caprolactam, N-vinyl imidazole, etc. The amount of the aforementioned cationic polymerized compound in the cationic polymerized compositions is 1 through 97 wt%, preferably 30 through 95 wt%.

[Hybrid photocurable resin layer]

For the hybrid type (a combined use of radical polymerized type and cationic polymerized type), its compositions are listed in the Japanese Patent Tokkaihei 4-181944 and others. To put it more specifically, any one of the aforementioned cationic polymerized initiator, cationic polymerized compound, radical initiator and radical polymerized compound should be contained. In the present invention, the cationic polymerized compound is preferred to contain the vinyl ether base compound.

<Ultraviolet absorber>

In the present invention, an ultraviolet absorber may be used in the photocurable resin containing layer. There is no restriction to the material used for the ultraviolet absorber layer if it performs the functions of the ultraviolet absorber for a pigment image and if it can be thermally transferred. For example, it is possible to use the compounds listed in the Japanese Patent Tokkaisho 59-158287, Japanese Patent Tokkaisho 63-74686, Japanese Patent Tokkaisho 63-145089, Japanese Patent Tokkaisho 59-196292, Japanese Patent Tokkaisho 62-229594, Japanese Patent Tokkaisho 63-122596, Japanese Patent Tokkaisho 61-283595, and Japanese Patent Tokkaihei 1-204788, as well as the compounds that can improve the image durability of the photos and other image recording media. To put it more specifically, salicylic acid derivatives, benzophenone derivatives, benzotriazole derivatives and cyanoacrylate derivatives can be mentioned. For example, it is possible to use the products having the following trademarks: Tinuvin P, Tinuvin 123, 234, 320, 326, 327, 328, 312, 315, 384, 400 (by Chiba Geigie Inc.), Sumisorb-110, 130, 140, 200, 250, 300, 320, 340, 350, 400 (by Sumitomo Chemical Co., Ltd.), MarkLa 32, 36, 1413 (by Adekaahgas Kagaku Inc.). Further, a pendant polymer having a benzophenone derivative on the side chain can also be used preferably. The inorganic fine grains having absorbing capacity on the ultraviolet area and ultrafine grain metallic oxide powder dispersant can also be employed. Titanium oxide, zinc oxide and silicon compound can be mentioned as the inorganic fine grain. The ultrafine grain metallic oxide powder dispersant can be manufactured includes the ultrafine grain zinc oxide powder and ultrafine grain titanium oxide powder manufactured by using water, alcohol or various types of oil-based dispersant, and surface active agent, water soluble polymer, solvent soluble polymer and such other dispersants.

The following other additives can also be added:

(1) pigments, sensitizer and photosensitizer described in "Pigment Handbook" edited by OKAWARA Nobuo et al. (1986, Kodansha Co., Ltd.), "Chemistry of Functional Pigment" edited by OKAWARA Nobuo et al. (1981, CMC), "Special Functional Material" edited by IKEMORI Chuzaburo et al. (1986, CMC) and Japanese Patent Tokuganhei 7-108045;

(2) polymerization accelerators chain transfer agents and polymerization inhibitors such as:

thiol and related substances disclosed in the U.S. Patent No. 4,414,312 and Japanese Patent Tokkaisho 64-13144;
disulfides given in the Japanese Patent Tokkaihei 2-291561;
thion and related substances disclosed in the U.S. Patent No. 3,558,322 and Japanese Patent Tokkaisho 64-17048; and
o-acyl thiohydroxyamate and N-alkoxy pyridinethion given in the Japanese Patent Tokkaihei 2-291560;

(3) static eliminating agents described in "11290 Chemical Products", Kagakukogyo Nippo Co., Ltd., pp. 875-876;
(4) nonionic surface active agents described in the Japanese Patent Tokkaisho 62-251740 and Japanese Patent Tokkaihei 3-208514; and
(5) ampholytic surface active agents given in the Japanese Patent Tokkaisho 59-121044 and Japanese Patent Tokkaihei 4-13149.

Further, vinyl monomers such as polyvinyl butyral resin, polyurethane resin, polyamide resin, polyester resin, epoxy resin, novolak resin, styrene, paramethyl styrene, methacrylic acid ester and acrylic acid ester; and any other high molecular polymers such as cellulose monomers, thermoplastic polyester and naturally-occurring resin can be used in combination. Further, the following can also be used in combination: organic high molecular polymers given in "Practical Technology of New Photosensitive Resin" edited by AKAMATSU Kiyotaka (CMC, 1987), and "10188 Chemical Products" pp. 657-767 (Kakaku Kogyo Nippo, 1988). In the present invention, particularly, the unsaturated group containing resin is preferably used. It includes the radical or polymerizable group. The unsaturated group in the sense in which it is used here refers to the glycidyl group, (metha)acryloyl group, vinyl group and others. To put it more specifically, it includes the resins having the following structure. The amount of these high molecular polymers used in the photosensitive composition is preferably 1 through 70 wt%, more preferably 5 through 50 wt%.

When the ultraviolet absorber and photocurable resin material are contained in the protective layer, the amount of the ultraviolet absorber is preferably 0 through 20 wt% relative to 100 wt% of the overall solid, more preferably 0 through 10 wt% or less. The thickness of the protective layer containing the ultraviolet absorber and photocurable resin material in the present invention is preferably 3 through 50 $g/m^2$, more preferably 3 through 40 $g/m^2$, still more preferably 3 through 35 $g/m^2$.

According to various objectives of the protective layer of the present invention, the following substances can be used in combination; dyes, organic and inorganic pigments, oxygen removing agent such as phosphine and phosphinate, reducing agent, anti-fogging agent, anti-discoloring agent, anti-halation agent, fluorescent whitening agent, coloring agent, extender, plasticizer, flame retardant, oxidant inhibitor, light stabilizer, foaming agent, mildew proofing agent, additives for assigning magnetism and other properties, dilution solvent, etc.

<Production method>

When the protective layer composed of the photocurable resin material of the present invention is formed on the image recording medium, it is preferably formed by coating or by using a transfer foil.

<Formation method 1>

The coating methods to be used for formation on the image recording medium comprise rotary coating, wire bar coating, dip coating, felt coating, air knife coating, spray coating, air spray coating, electrostatic air spray coating, roll coating, blade coating and curtain coating methods. The amount of coating depends on the purpose of application, but is preferably 0.05 through 50.0 g/m$^2$ in terms of solids. As the amount of coating is reduced, the apparent sensitivity is increased, and the film characteristics and chemical resistance of the image forming layer are degraded. Any method for curing after coating can be used if it allows activated magnetic waves to be generated.

[Activated light for curing]

Means for curing after coating includes a laser, light emitting diode, xenon flash lamp, halogen lamp, carbon arc lamp, metal halide lamp, tungsten lamp, mercury lamp and non-electrode light source. It is preferred to use the xenon flash lamp, halogen lamp, carbon arc lamp, metal halide lamp, tungsten lamp, mercury lamp and non-electrode light source. The energy applied in this case can be adequately selected by adjusting the exposure distance, time and intensity, in conformity to the type of the polymerization initiator. Further, when activated light is used for photocuring, a means can be used to ensure photocuring stability in a nitrogen flow under reduced pressure.

When the Formation method 1 is used, the image layer surface is protected by a transfer foil (to be described below) in advance in order to bring the ultraviolet absorber-containing layer closer to the image recording medium. Then the surface protective layer is formed according to the Formation method 1.

<Formation method 2>

When the protective layer of the ultraviolet absorber and photocurable resin material is formed on the image recording medium in the present invention, a transfer foil composed of the following material can be provided. Transfer may be performed twice or more using the transfer foil. If transfer is performed twice or more using the transfer foil, the mechanical strength of the surface and light resistance are improved. This is preferable. In this case, the ultraviolet absorber can be contained in the first layer or in one of the second and subsequent layers located on the upper portion of the image forming layer. It is contained preferably in one of the second and subsequent layers.

[Detailed description of transfer foil]

The transfer foil in the present invention is preferably composed of a support member having a protective layer comprising an ultraviolet absorber and photocurable resin material. The transfer foil is more preferably composed of a layer comprising at least one of the stripping layer, photocurable resin layer, image forming protective layer, intermediate layer, barrier layer, primer layer and adhesive layer. It is still more preferred that the ultraviolet absorber-containing layer be contained in any one of an intermediate layer, barrier layer, primer layer and adhesive layer.

In the present invention, forgery and alteration can be prevented by an IC chip. Since visual identification is the object of the present invention, an optical variable device (OVD) layer can be provided.

[Transfer foil support member]

The support member is a simple layer or a laminated layer composed of two more of these layers, comprising the synthetic resin sheet, paper such as bond paper, tissue paper, glassine paper and parchment paper, and metal foils, wherein the synthetic resin sheet comprising:

a polyester resin such as polyethylene terephthalate, polybutylene terephthalate and polyethylene terephthalate/isophthalate copolymer;
a polyolefin resin such as polyethylene, polypropylene and polymethyl pentene;
a polyethylene fluoride resin such as polyvinyl fluoride, polyvinylidene fluoride, polyethylene tetrafluoride and ethylene-tetrafluoride copolymer;
a polyamide such as such as nylon 6 and nylon 6.6,
a vinyl polymer such as polyvinyl chloride, vinyl chloride/vinyl acetate copolymer, ethylene/vinyl acetate copolymer, ethylene/vinyl alcohol copolymer, polyvinyl alcohol and vinylon;
a cellulose resin such as cellulose triacetate and cellophane;
a acryl resin such as polymethyl methacrylate, polyethyl methacrylate, polyethyl acrylate and polybutyl acrylate;

and

a synthetic resin such as polystyrene, polycarbonate, polyarylate and polyimide.

The thickness of the support member in the present invention is 10 through 200 µm, preferably 15 through 80 µm. If the thickness is 10 µm or less, the support member may be damaging during the process of transfer. In the specific stripping layer, use of polyethylene terephthalate is preferred.

The support member in the present invention can be provided with a concavo-convex pattern, if required. The concavo-convex pattern can be formed by rubbing of a matting agent, sand blasting, hairline processing, matte coating or chemical etching. In the case of matte coating, either an organic or inorganic substance can be used. For example, the inorganic substance includes silica disclosed in the Swiss Patent No. 330,158; glass powder disclosed in the French Patent No. 1,296,995; alkaline earth metal, cadmium; and carbonate such as zinc. Disclosed in the English Patent No. 1,173,181, They can be used as matting agents. The organic matting agents that can be used are: organic substance includes: starch disclosed in the U.S. Patent No. 2,322,037; starch derivatives disclosed in the Belgium Patent No. 625,451 and English Patent No. 981,198; polyvinyl alcohol described in Japanese Patent Tokkosho 44-3643; polystyrene or polymethacrylate disclosed in the Swiss Patent 330,158; polyacrylonitrile described in U.S. Patent No. 3,079,257; and polycarbonate described in U.S. Patent No. 3,022,169. The matting agent is coated by dispersing the matting agent in a coating solution in advance. The matting agent can be coated by spraying it after the coating solution has been applied, before it is dried up. When a plurality of matting agents are added, both of the aforementioned methods can be used in combination. When concavo-convex patterns are provided, they can be provided on either the transfer surface or the reverse surface. To provide a static eliminating means subsequent to transfer and stripping, a static eliminating layer can be formed. It can be formed on both or either side of the support member. Alternatively, it can be formed between the support member for transfer foil and photocurable resin layer.

[Transfer and foil stripping layer]

The stripping layer can be made of a resin, such as acryl resin, polyvinyl acetal resin and polyvinyl butyral resin, having a high glass transition temperature. It can also comprise waxes, silicone oils, fluorine compound, water-soluble polyvinyl pyrrolidone resin, polyvinyl alcohol resin, Si modified polyvinyl alcohol resin, methyl cellulose resin, hydroxy cellulose resin, silicone resin, paraffin wax, acryl modified silicone, polyethylene wax, ethylene vinyl acetate, and other resins of similar kind. Further, this layer can be composed of polydimethyl siloxane, its modified substances, e.g. polyester modified silicone, acryl modified silicone, urethane modified silicone, alkyd modified silicone, amino modified silicone, epoxy modified silicone, polyether modified silicone, such other oils and resins, and their cured substances. Other fluorine compounds include fluorinated olefin and perfluoro phosphoric acid ester compounds. The preferred compounds of olefin derivatives are dispersions of polyethylene and polypropylene, and long-chain alkyl derivative compounds such as polyethyleneimine octadesyl. These mold releasing agents having a poor solubility can be used through a process of dispersion.

When two transfer foils are to be transferred, thermoplastic elastomer can be added. The thermoplastic resin elastomer specifically includes styrene derivatives (styrene block copolymer (SBC)), olefin derivatives (TP), urethane (TPU), polyester (TPEE), polyamide derivatives (TPAE), 1,2-polybutadiene derivatives, polyvinyl chloride derivatives (TPVC), fluorine derivatives, ionomer resin, chlorinated polyethylene, and silicone derivatives. More specific examples are described in "12996 Chemical Products" for 1996 (Kagaku Kogyo Nippo Co., Ltd.). The thickness of the stripping layer is preferably 0.000001 through 5.0 µm, more preferably 0.000001 through 3.0 µm, still more preferably 0.00005 through 3.0 µm.

If required, a thermoplastic resin layer may be arranged between the stripping layer and resin layer or activated light curing layer in the present invention. To put it more specifically, it is possible to use polyester resin, acryl resin, epoxy resin, xylene resin, guanamine resin, diallyl phthalate resin, phenol resin, polyimide resin, maleic acid resin, melamine resin, urea resin, polyamide resin, urethane resin and others.

[Photocurable resin material]

The protective layer composed of the aforementioned photocurable resin material can be utilized.

[Image protective layer]

When the Formation method 1 is used for the formation of the image protective layer, an image surface protective layer is preferably arranged. The aforementioned photocurable resin material may be used. When the surface protective layer is formed according to the Formation method 1, the general thermoplastic resin can be used in order to improve the lamination performance. To put it more specifically, it includes polyvinyl butyral resin, polyurethane resin, polyamide resin, polyester resin, epoxy resin, novolak resin, styrene, paramethyl styrene, methacrylic acid ester, acryl ester, such related vinyl monomers, cellulose derivatives, thermoplastic polyester, natural resin, and other high molecular polymer. Further, the following can also be used in combination: organic high molecular polymers given in "Practical Technology of New Photosensitive Resin" edited by AKAMATSU Kiyotaka (CMC, 1987), and "10188 Chemical Products" pp. 657-767 (Kakaku Kogyo Nippo Co., Ltd. 1988). In the present invention, to protect the image recording medium, a light and/or thermosetting layer is preferably arranged on the image recording medium using a transfer foil. There is no restriction to the light and/or thermosetting layer if it is made of the material comprising the aforementioned composition. The thickness of the resin layer is preferably 0.3 through 20 μm, more preferably 0.3 through 10 μm, particularly preferably 0.5 through 10 μm.

[Intermediate layer, primary layer and barrier layer]

The intermediate layer of the transfer foil is preferably composed of one or more intermediate layers. If required, it can be provided as a primary layer or barrier layer to further improve the adhesion performance between layers.

For example, it is possible to use vinyl chloride resin, polyester resin, acryl resin, polyvinyl acetal resin, polyvinyl butyral resin, polyvinyl alcohol, polycarbonate, cellulose resin, styrene resin, urethane resin, amide resin, urea resin, epoxy resin, phenoxy resin, polycaprolactone resin, polyacrylonitrile resin, SEBS resin, SEPS resin and their modified substances.

Of the aforementioned resins, those preferable for the purpose of the present invention are vinyl chloride resin, polyester resin, acryl resin, polyvinyl butyral resin, styrene resin, epoxy resin, urethane resin, urethane acrylate resin, SEES resin and SEPS resin. These resins can be used independently or in combination with others.

To put it more specifically, use of the thermoplastic resin composed of a block polymer of polystyrene and polyolefin and polyvinyl butyral is preferred. For the intermediate layer of the present invention, the polyvinyl butyral having a degree of polymerization of 1000 or more includes Esrec BH-3, BX-1, BX-2, BX-5, BX-55 and BH-S by Sekisui Chemical Co., Ltd. and Denka butyral #4000-2, #5000-A and #6000-EP by Denki Kagaku Kogyo Co., Ltd. are sold on the market. The resin having a low degree of polymerization before thermosetting can be used as a thermoplastic resin of the intermediate layer. The isocyanate curing agent and epoxy curing agent are used for thermosetting. Thermosetting is preferably carried out at 50 through 90 degrees Celsius for 1 through 24 hours. Further, this intermediate layer may contain such additives as the aforementioned ultraviolet absorber, oxidant inhibitor, light stabilizer and static eliminating agent. When the ultraviolet absorber is added, its amount is preferably 0 through 20 wt% relative to 100 wt% of the overall solid, more preferably 0 through 10 wt%. The thickness of the intermediate layer is preferably 0.1 through 3.0 μm, more preferably 0.1 through 2.0 μm.

[Adhesive layer]

The thermal adhesion resin for the adhesive layer of the transfer foil includes ethylene vinyl acetate resin, ethyne ethyl acrylate resin, ethylene acrylate resin, ionomer resin, polybutadiene resin, acryl resin, polystyrene resin, polyester resin, olefin resin, urethane resin, tacky producer (e.g. phenol resin, rosin resin, terpene resin, petroleum resin, etc.). Their copolymer or mixture can also be used.

To put it more specifically, Hightech S-6254, S-6254B and S-3129 by Toho Chemical Industry Co., Ltd. are sold as an urethane modified ethylene ethylacrylate copolymer. Jurimer AT210, AT-510 and AT-613 of Nippon Junyaku Co., Ltd. and Plus Size L-201, SR-102, SR-103 and J-4 by Gas Kagaku Co., Ltd. are available on the market as polyacrylic acid ester copolymer. The weight ratio of urethane modified ethylene ethylacrylate copolymer and polyacrylic acid ester copolymer is preferably in the range of 9 to 1 through 2 to 8. The thickness of the adhesive layer is preferably 0.1 through 1.0 μm. Further, this adhesive layer may contain additives such as the aforementioned ultraviolet absorber, oxidant inhibitor, light stabilizer and static eliminating agent. When an ultraviolet absorber is added, the amount of the ultraviolet absorber is preferably 0 through 20 wt% relative to 100 wt% of the overall solid, more preferably 0 through 10 wt% or less.

[Other layers]

To protect against forgery and alteration, an Optical Variable Device (OVD) layer can be provided. The optical variable device refers to:

1) a device with 2D computer graphic image of a diffraction grating such as kinegram, wherein the image of line image configuration makes a free change of traveling, rotation, expansion and reduction;
2) a device wherein the image is switched between positive and negative as in a pixel gram.

3) a device where color changes from gold to green, as in the optical security device (OSD),

4) a device wherein an image appears changing, as in the long lasting economical anticopy device (LEAD)

5) a stripe type OVD, and

6) a metal foil.

Means may be provided to protect the security using the paper material, special printing technique and special ink described in a report printed in the journal of the Japanese Society of Printing Science and Technology (1998), Vol. 35, No. 6, pp. 482-496. In the present invention, use of a hologram is particularly preferred.

The hologram used in the present invention can be any one of the following: a laser reproduced hologram such as a relief hologram, Fresnel hologram, Fraunhofer hologram, lensless Fourier transformation hologram and image hologram; a white reproduction hologram such as a Lippmann hologram and rainbow hologram; a color hologram, computer hologram, hologram display, multi hologram, hologram flex teleogram and holographic diffraction grating.

[Method for applying a transfer foil on image recording medium]

The transfer foil is normally transferred onto the transferred material by a means for applying pressure while the thermal head, heat roller and hot stamping machine are heated.

EMBODIMENTS

<Creating the first sheet member 1>

The U2L98W, Teijin Dupont Inc., a white support member having a thickness of 188 μm was used. The degree of whiteness of the support member was 84.7%. The layers composed of the following compositions were coated sequentially and dried to form a first sheet member 1. Since a cushioning member was not provided, measurement by the thermal mechanical analyzer (TMA) at 100 and 170 degrees Celsius was not carried out.

| | |
|---|---|
| (Ultraviolet absorber-containing layer) Film thickness | 1.5 μm |
| Polyvinyl butyral resin (Esreck BL-1 by Sekisui Chemical Co., Ltd.) | 8 parts |
| Isocyanate [Coronate HX by Nippon Polyurethane Kogyo Co., Ltd.] | 1 part |
| Ultraviolet absorber (TINUVIN-P by Chiba Geigie Inc.) | 1 part |
| Methyl ethyl ketone 80 | parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer: [Hightech S6254 by Toho Chemical Industry Co., Ltd.] | 8 parts |

(continued)

| | |
|---|---|
| Methyl cellulose [SM15 by Shinetsu Chemical Co., Ltd.] | 0.1 part |
| Water: | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mJ in terms of high voltage mercury lamp.

<Creating the first sheet member 2>

The Luminar E20 by Toray Industries, Inc., a white support member having a thickness of 188 μm was used. The degree of whiteness of the support member was 90.9%. The layers composed of the following compositions were coated sequentially and dried to form a first sheet member 2.

| | |
|---|---|
| (Ultraviolet absorber-containing layer) Film thickness | 1.0 μm |
| Silane coupling agent (TSL-8370 by Toshiba Silicone Co., Ltd.) | 9 parts |
| Ultraviolet absorber (TINUVIN-928 by Chiba Geigie Inc.) | 1 part |
| Methyl ethyl ketone | 80 parts |
| Butyl acetate | 10 parts |
| (Photocurable cushioning layer)Film thickness: 10 μm | |
| Urethane acrylate oligomer (NK Oligo UA512 by Shinnakamura Kagaku Co., Ltd.) | 5 parts |
| Polyester acrylate (Aronix M6200 by Toa Gosei Co., Ltd.) | 15 parts |
| Urethane acrylate oligomer (NK Oligo UA4000 by Shinnakamura Kagaku Co., Ltd.) | 25 parts |
| Hydroxycyclohexylphenyl ketone (Irgacure 184 by Chiba Specialty Chemicals) | 5 parts |
| Methyl ethyl ketone | 100 parts |

After coating, the activated photocurable compound was dried at a temperature of 90 degrees Celsius for 30 seconds. Then it was photo-cured by a mercury lamp (300 mJ/cm$^2$). The displacement of penetration of the cushioning layer by the thermal mechanical analyzer (TMA) at a temperature of 100 degrees Celsius was 1.2% with respect to the thickness of the layer. The displacement of penetration by the thermal mechanical analyzer (TMA) at a temperature of 170 degrees Celsius was 85% with respect to the thickness of the layer.

(Image cushioning layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer[Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 3>

The U2L98W, Teijin Dupont Inc., a white support member having a thickness of 188 μm was used. The degree of whiteness of the support member was 84.7%. The layers composed of the following compositions were coated sequentially and dried to form a first sheet member 3.

| | |
|---|---|
| (Ultraviolet absorber-containing cushioning photocurable layer) Film thickness | 10 μm |
| Urethane acrylate oligomer (NK Oligo UA512 by Shinnakamura Kagaku Co., Ltd.) | 53 parts |
| Polyester acrylate (Aronix M6200 by Toa Gosei Co., Ltd.) | 15 parts |
| Urethane acrylate oligomer (NK Oligo UA4000 by Shinnakamura Kagaku Co., Ltd.) | 25 parts |
| Hydroxycyclohexylphenyl ketone (Irgacure 819 by Chiba Specialty Chemicals) | 5 parts |
| Ultraviolet absorber (TINUVIN-400 by Chiba Geigie Inc.): | 2 parts |
| Methyl ethyl ketone | 100 parts |

After coating, the activated photocurable compound was dried at a temperature of 90 degrees Celsius for 30 seconds. Then it was photo-cured by a mercury lamp (300 mJ/cm$^2$). The displacement of penetration of the cushioning layer by the thermal mechanical analyzer (TMA) at a temperature of 100 degrees Celsius was 1.2% with respect to the thickness of the layer. The displacement of penetration by the thermal mechanical analyzer (TMA) at a temperature of 170 degrees Celsius was 85% with respect to the thickness of the layer.

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone: | 80 parts |
| Butyl acetate | 10 parts |

<Coating solution for formation of the second image carrying layer>

| | |
|---|---|
| Polyethylene wax: [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 4>

The U2L98W, Teijin Dupont Inc., a white support member having a thickness of 125 $\mu$m was used. The degree of whiteness of the support member was 84.6%. The layers composed of the following compositions were coated sequentially and dried to form a first sheet member 4.

| | |
|---|---|
| (Ultraviolet absorber-containing layer) Film thickness | 1.0 $\mu$m |
| Silane coupling agent (TSL-8370 by Toshiba Silicone Co., Ltd.) | 9 parts |
| Ultraviolet absorber (TINUVIN-P by Chiba Geigie Inc.) | 0.5 part |
| Light stabilizer (TINUVIN-123 by Chiba Geigie Inc.) | 0.5 part |
| Methyl ethyl ketone | 80 parts |
| Butyl acetate (Photocurable cushioning layer) Film thickness: 10 $\mu$m | 10 parts |
| Urethane acrylate oligomer (NK Oligo UA512 by Shinnakamura Kagaku Co., Ltd.) | 55 parts |
| Polyester acrylate (Aronix M6200 by Toa Gosei Co., Ltd.) | 15 parts |
| Urethane acrylate oligomer (NK Oligo UA4000 by Shinnakamura Kagaku Co., Ltd.) | 25 parts |
| Hydroxycyclohexylphenyl ketone (Irgacure 184 by Chiba Specialty Chemicals) | 5 parts |
| Methyl ethyl ketone | 100 parts |

After coating, the activated photocurable compound was dried at a temperature of 90 degrees Celsius for 30 seconds. Then it was photo-cured by a mercury lamp (300 mJ/cm$^2$). The displacement of penetration of the cushioning layer by the thermal mechanical analyzer (TMA) at a temperature of 100 degrees Celsius was 1.2% with respect to the thickness of the layer. The displacement of penetration by the thermal mechanical analyzer (TMA) at a temperature of 170 degrees Celsius was 85% with respect to the thickness of the layer.

<Image carrying layer>

The coating solution for the first image carrying layer and that for the second image carrying layer having the following composition were applied in that order and were dried. Lamination was carried out until the thicknesses were 2.5 and 0.5 $\mu$m, respectively, whereby an image carrying layer was formed.

<Coating solution for formation of the first image carrying layer>

| | |
|---|---|
| Polyvinyl butyral resin: Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer: [Hightech S6254 by Toho Chemical Industry Co., Ltd.] | 8 parts |
| Methyl cellulose [SM15 by Shinetsu Chemical Co., Ltd.]: | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 5>

The Luminar E20 by Toray Industries, Inc., a white support member having a thickness of 188 μm was used. The degree of whiteness of the support member was 90.9%. The white polypropylene resin (Noblen FL25HA by Mitsubishi Petrochemical Co., Ltd.) as a cushioning layer was provided on the support member to a thickness of 20 μm, according to the extension lamination method. The displacement of penetration of the cushioning layer composed of white polypropylene by the thermal mechanical analyzer (TMA) at a temperature of 100 degrees Celsius was 3.2% with respect to the thickness of the layer. The displacement of penetration by the thermal mechanical analyzer (TMA) at a temperature of 170 degrees Celsius was 94% with respect to the thickness of the layer.
The layers composed of the following compositions were coated sequentially and dried to form a first sheet member 5.

| | |
|---|---|
| (Ultraviolet absorber-containing layer) Film thickness | 1.0 μm |
| Polyvinyl butyral resin Esreck BL-1 by Sekisui Chemical Co., Ltd.) | 8 parts |
| Isocyanate [Coronate HX by Nippon Polyurethane Kogyo Co., Ltd.] | 1 part |
| Ultraviolet absorber (TINUVIN-P by Chiba Geigie Inc.): | 1 part |
| Methyl ethyl ketone | 80 parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for formation of the first image carrying layer>

| | |
|---|---|
| Polyvinyl butyral resin[Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 6>

The U2L98W, Teijin Dupont Inc., a white support member having a thickness of 188 $\mu$m was used. The degree of whiteness of the support member was 84.7%. The layers composed of the following compositions were coated sequentially and dried to form a first sheet member 6. Since a cushioning member was not provided, measurement by the thermal mechanical analyzer (TMA) at 100 and 170 degrees Celsius was not carried out.

(Image carrying layer)

The coating solution for the first image carrying layer and that for the second image carrying layer having the following composition were applied in that order and were dried. Lamination was carried out until the thicknesses were 2.5 and 0.5 $\mu$m, respectively, whereby an image carrying layer was formed.

<Coating solution for formation of the first image carrying layer>

| | |
|---|---|
| Polyvinyl butyral resin[Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.]: | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 7>

The E60L by Toray Industries, Inc., a white support member having a thickness of 188 μm was used. The degree of whiteness of the support member was 100%. The layers composed of the following compositions were coated sequentially and dried to form a first sheet member 7. Since a cushioning member was not provided, measurement by the thermal mechanical analyzer (TMA) at 100 and 170 degrees Celsius was not carried out.

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for formation of the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer: [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 8>

The E60L by Toray Industries, Inc., a white support member having a thickness of 188 μm was used. The degree of whiteness of the support member was 100%. The layers composed of the following compositions were coated sequentially and dried to form a first sheet member 8. Since a cushioning member was not provided, measurement by the thermal mechanical analyzer (TMA) at 100 and 170 degrees Celsius was not carried out.

| | |
|---|---|
| (Ultraviolet absorber-containing layer) Film thickness | 1.0 μm |
| Polyvinyl butyral resin Esreck BL-1 by Sekisui Chemical Co., Ltd.) | 8 parts |
| Isocyanate [Coronate HX by Nippon Polyurethane Kogyo Co., Ltd.] | 1 part |
| Ultraviolet absorber (TINUVIN-P by Chiba Geigie Inc.): | 1 part |
| Methyl ethyl ketone | 80 parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 µm, respectively, whereby an image carrying layer was formed.

<Coating solution for formation of the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 9>

The E60 by Toray Industries, a white support member having a thickness of 75 µm was used. The degree of whiteness of the support member was 74%. The layers composed of the following compositions were coated sequentially and dried to form a first sheet member 9. Since a cushioning member was not provided, measurement by the thermal mechanical analyzer (TMA) at 100 and 170 degrees Celsius was not carried out.

(Image carrying layer)

The coating solution for the first image carrying layer and that for the second image carrying layer having the following composition were applied in that order and were dried. Lamination was carried out until the thicknesses were 2.5 and 0.5 µm, respectively, whereby an image carrying layer was formed.

<Coating solution for formation of the first image carrying layer>

| | |
|---|---|
| Polyvinyl butyral resin: [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 10>

The E60 by Toray Industries, Inc., a white support member having a thickness of 75 μm was used. The degree of whiteness of the support member was 74%. The layers composed of the following compositions were coated sequentially and dried to form a first sheet member 10. Since a cushioning member was not provided, measurement by the thermal mechanical analyzer (TMA) at 100 and 170 degrees Celsius was not carried out.

| | |
|---|---|
| (Ultraviolet absorber-containing layer) Film thickness | 1.0 μm |
| Polyvinyl butyral resin: 8 Esreck BL-1 by Sekisui Chemical Co., Ltd.) | parts |
| Isocyanate [Coronate HX by Nippon Polyurethane Kogyo Co., Ltd.] | 1 part |
| Ultraviolet absorber (TINUVIN-P by Chiba Geigie Inc.) | 1 part |
| Methyl ethyl ketone | 80 parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for formation of the first image carrying layer>

| | |
|---|---|
| Polyvinyl butyral resin [Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 11>

The E60L by Toray Industries, Inc., a white support member having a thickness of 188 $\mu$m was used. The degree of whiteness of the support member was 100%. The layers composed of the following compositions were coated sequentially and dried to form a first sheet member 11. Since a cushioning member was not provided, measurement by the thermal mechanical analyzer (TMA) at 100 and 170 degrees Celsius was not carried out.

(Silane coupling agent layer)

Silane coupling agent

| | |
|---|---|
| (TSL-8370 by Toshiba Silicone Co., Ltd.) | 1 part |
| Methyl ethyl ketone | 89 parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 $\mu$m, respectively, whereby an image carrying layer was formed.

<Coating solution for formation of the first image carrying layer>

| | |
|---|---|
| Polyvinyl butyral resin[Esreck BX-1 by Sekisui Chemical Co., Ltd.) | 6 parts |
| Metal ion containing compound (compound MS) | 4 parts |
| Methyl ethyl ketone | 80 parts |
| Butyl acetate | 10 parts |

<Coating solution for formation of the second image carrying layer>

| | |
|---|---|
| Polyethylene wax [Hightech E1000 by Toho Chemical Industry Co., Ltd.] | 2 parts |
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 12>

The U2L98W, Teijin Dupont Inc., a white support member having a thickness of 188 µm was used. The degree of whiteness of the support member was 84.7%. The layers composed of the following compositions were coated sequentially and dried to form a first sheet member 12.

| (Photocurable cushioning layer) Film thickness | 10 µm |
|---|---|
| Urethane acrylate oligomer (NK Oligo UA512 by Shinnakamura Kagaku Co., Ltd.) | 55 parts |
| Polyester acrylate (Aronix M6200 by Toa Gosei Co., Ltd.) | 15 parts |
| Urethane acrylate oligomer (NK Oligo UA4000 by Shinnakamura Kagaku Co., Ltd.) | 25 parts |
| Hydroxycyclohexylphenyl ketone (Irgacure 184 by Chiba Specialty Chemicals) | 5 parts |
| Methyl ethyl ketone | 100 parts |

After coating, the activated photocurable compound was dried at a temperature of 90 degrees Celsius for 30 seconds. Then it was photo-cured by a mercury lamp (300 mJ/cm$^2$). The displacement of penetration of the cushioning layer by the thermal mechanical analyzer (TMA) at a temperature of 100 degrees Celsius was 12% with respect to the thickness of the layer. The displacement of penetration by the thermal mechanical analyzer (TMA) at a temperature of 170 degrees Celsius was 85% with respect to the thickness of the layer.

(Silane coupling agent layer)

Silane coupling agent

| (TSL-8370 by Toshiba Silicone Co., Ltd.) | 1 part |
|---|---|
| Methyl ethyl ketone | 89 parts |
| Butyl acetate | 10 parts |

(Image carrying layer)

The coating solution for the first image carrying layer and that for the second image carrying layer having the following composition were applied in that order and were dried. Lamination was carried out until the thicknesses were 2.5 and 0.5 µm, respectively, whereby an image carrying layer was formed.

<Coating solution for formation of the first image carrying layer>

| Polyvinyl butyral resin[Esreck BX-1 by Sekisui Chemical Co., Ltd.) | 6 parts |
|---|---|
| Metal ion containing compound (compound MS) | 4 parts |
| Methyl ethyl ketone | 80 parts |
| Butyl acetate | 10 parts |

<Coating solution for formation of the second image carrying layer>

| Polyethylene wax [Hightech E1000 by Toho Chemical Industry Co., Ltd.] | 2 parts |
|---|---|
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the first sheet member 13>

The U2L98W, Teijin Dupont Inc., a white support member having a thickness of 188 μm was used. The degree of whiteness of the support member was 84.7%. The layers composed of the following compositions were coated sequentially and dried to form a first sheet member 13.

(Silane coupling agent layer)

Silane coupling agent

| (TSL-8370 by Toshiba Silicone Co., Ltd.) | 1 part |
|---|---|
| Methyl ethyl ketone | 89 parts |
| Butyl acetate | 10 parts |
| (Photocurable cushioning layer): Film thickness | 10 μm |
| Urethane acrylate oligomer (NK Oligo UA512 by Shinnakamura Kagaku Co., Ltd.) | 55 parts |
| Polyester acrylate (Aronix M6200 by Toa Gosei Co., Ltd.) | 15 parts |
| Urethane acrylate oligomer (NK Oligo UA4000 by Shinnakamura Kagaku Co., Ltd.) | 25 parts |
| Hydroxycyclohexylphenyl ketone (Irgacure 184 by Chiba Specialty Chemicals) | 5 parts |
| Methyl ethyl ketone | 100 parts |

After coating, the activated photocurable compound was dried at a temperature of 90 degrees Celsius for 30 seconds. Then it was photo-cured by a mercury lamp (300 mJ/cm$^2$). The displacement of penetration of the cushioning layer by the thermal mechanical analyzer (TMA) at a temperature of 100 degrees Celsius was 12% with respect to the thickness of the layer. The displacement of penetration by the thermal mechanical analyzer (TMA) at a temperature of 170 degrees Celsius was 85% with respect to the thickness of the layer.

(Image carrying layer)

The coating solution for the first image carrying layer and that for the second image carrying layer having the following composition were applied in that order and were dried. Lamination was carried out until the thicknesses were 2.5 and 0.5 μm, respectively, whereby an image carrying layer was formed.

<Coating solution for formation of the first image carrying layer>

| Polyvinyl butyral resin[Esreck BX-1 by Sekisui Chemical Co., Ltd.) | 6 parts |
|---|---|
| Metal ion containing compound (compound MS) | 4 parts |
| Methyl ethyl ketone | 80 parts |
| Butyl acetate | 10 parts |

<Coating solution for formation of the second image carrying layer>

| Polyethylene wax [Hightech E1000 by Toho Chemical Industry Co., Ltd.] | 2 parts |
|---|---|
| Urethane modified ethylene acrylate copolymer [Hightech S6254 by Toho Chemical Industry Co., Ltd.] | 8 parts |
| Methyl cellulose [SM15 by Shinetsu Chemical Co., Ltd.] | 0.1 part |
| Water | 90 parts |

(Information carrying layer composed of format printing layer)

Format printing (of employee's ID card and name) was applied on the image carrying layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the second sheet member 1>

The U2L98W, Teijin Dupont Inc., a white support member having a thickness of 188 μm was used. The degree of whiteness of the support member was 84.7%.

(Information carrying layer composed of format printing layer)

Format printing (of employee's ID card and name) was applied on the outermost layer according to the offset printing method. Ultraviolet ink was used for printing. Using the offset printing method, transparent ultraviolet cure OP varnish (FD-O Dry Coat varnish by Seito Ink Co., Ltd.) was applied to the area above it except for the sublimation transfer image recording area. The energy of the ultraviolet rays applied in the process of printing corresponded to 200 mj in terms of high voltage mercury lamp.

<Creating the second sheet member 2>

The U2L98W, Teijin Dupont Inc., a white support member having a thickness of 188 μm was used. The degree of whiteness of the support member was 84.7%.

(Information carrying layer composed of format printing layer) A second sheet member was formed by coating the writing layers composed of the following compositions sequentially until the thicknesses of 5 μm, 15 μm and 0.2 μm were reached, respectively, and by drying them thereafter.

<Coating solution for formation of the first writing layer>

| Polyester resin [Byron 200 by Toyobo Co., Ltd.] | 8 parts |
|---|---|
| Isocyanate [Coronate HX by Nippon Polyerethan Kogyo Co., Ltd.] | 1 part |
| Carbon black a trace quantity | |
| Titanium dioxide particle [CR80 by Ishihara Sangyo Kaisha Ltd.] | 1 part |
| Methyl ethyl ketone | 80 parts |
| Butyl acetate | 10 parts |

<Coating solution for formation of the second writing layer>

| Polyester resin [Byron MD1200 by Toyobo Co., Ltd.] | 4 parts |
|---|---|
| Silica | 5 parts |
| Titanium dioxide particle [CR80 by Ishihara Sangyo Kaisha Ltd.] | 1 part |
| Water | 90 parts |

<Coating solution for formation of the third writing layer>

| | |
|---|---|
| Polyamide resin [Sunmide 55 by Sanwa Kagaku Co., Ltd.] | 5 parts |
| Methanol | 95 parts |

<Formation of information carrying layer on the third writing layer>

Format printing (of a ruled line and the name/telephone number of an issuer) was carried out according to the offset printing method. Ultraviolet ink was used for printing. The energy of the ultraviolet rays applied in the process of printing corresponded to 200 mj in terms of high voltage mercury lamp.

<Creating the second sheet member 3>

The second sheet member 3 was created using the aforementioned method, except that the support member used for formation of the aforementioned second sheet member 2 was changed. The E20 by Toray Industries, Inc., a white support member having a thickness of 188 μm was used. The degree of whiteness of the support member was 90.7%.

<Creating the second sheet member 4>

The second sheet member 4 was created using the aforementioned method, except that the support member used for formation of the aforementioned second sheet member 2 was changed. The U2L98W, Teijin Dupont Inc., a white support member having a thickness of 125 μm was used. The degree of whiteness of the support member was 84.6%.

<Creating the second sheet member 5>

The second sheet member 5 was created using the aforementioned method, except that the support member used for formation of the aforementioned second sheet member 2 was changed. The E60L by Toray Industries, Inc., a white support member having a thickness of 188 μm was used. The degree of whiteness of the support member was 100%.

<Creating the second sheet member 6>

The second sheet member 6 was created using the aforementioned method, except that the support member used for formation of the aforementioned second sheet member 2 was changed. The E60 by Toray Industries, Inc., a white support member having a thickness of 75 μm was used. The degree of whiteness of the support member was 74%.

In the present invention, an IC card or ID card substrate was created by an IC card or ID card substrate creating apparatus. The following describes the IC card or ID card substrate creating apparatus:

In the IC card or ID card substrate creating apparatus, a long-sized second sheet member (reverse sheet) having a thickness of 188 μm is arranged on the second sheet member (reverse sheet) supply section A. A first sheet member (front sheet) having a thickness of 188 μm is arranged on the first sheet (front sheet) supply section B. The adhesive, QR3460 wet curing type hot melt adhesive Macroprast by Henkel Japan, is fed from the adhesive solvent supply section C, and is melted in an atmosphere of nitrogen at a temperature of 130 degrees Celsius. The adhesive is supplied from the adhesive supply section D to the first member fed by the first sheet feed member F according to the T-die coating method. The electronic parts having a thickness of 300 μm are mounted on the coated portion from the solid member supply section E. When the ID card substrate was created, the solid member supply section E was not actuated. The IC card or ID card adhesive, more specifically, the QR3460 wet curing type hot melt adhesive Macroprast by Henkel Japan was supplied to the second sheet member (reverse sheet) having a thickness of 188 μm from the adhesive solvent supply section C at 130 degrees Celsius in an atmosphere of nitrogen according to the T-die coating method.

The first sheet member and second sheet member coated with adhesive at a low temperature are laminated by a heating/pressure roll H (pressure: 3 kg/cm$^2$; roll surface temperature: 65 degrees Celsius). An original block of the IC card substrate or ID card substrate controlled to a thickness of 740 μm by a film thickness control roll I is created and is fed by the card substrate feed member J. Trimming is performed preferably after the adhesive has been sufficiently cured and adhesion with the support member has been secured close enough. In the present invention, curing was promoted at a temperature of 23 degrees Celsius with 55% RH for 14 days. An original block was processed by a rotary cutter and was formed into an IC card substrate or ID card substrate having a size of 55 x 85 mm. If there was no format print section on the obverse and reverse sides of the finished card substrate, a logo mark and OP varnish were applied sequentially by a card printer according to the resin letterpress printing method.

[Method for recording a recognition-identification image and image information with attribute on the ID card]

Information was recorded on the IC card or ID card substrate, having a size of 55 x 85 mm, created in the aforementioned manner, using the following recording medium.

(Method for creating an ink sheet for sublimation thermal transfer recording)

A coating solution for yellow ink layer formation having the following composition and that for cyan ink layer formation having the following composition were coated on the polyethylene terephthalate sheet having a thickness of 6 μm with its reverse side processed for prevention of fusion, until each thickness reached 1 μm. Thus, ink sheets of three colors - yellow, magenta and cyan - were obtained.

| (Coating solution for yellow ink layer formation) | |
|---|---|
| Yellow dye (MS Yellow by Mitsui Toatsu Chemicals, Inc.) | 3 parts |
| Polyvinyl acetate [Denka butyral KY-24 by Denki Kagaku Kogyo Co., Ltd.] | 5.5 parts |
| Polymethyl methacrylate modified polystyrene [Tereda GP-200 by Toa Gosei Kagaku Co., Ltd.] | 1 part |
| Urethane modified silicone oil [Diaroma: SP-2105 by Dai Nippon Seika Kogyo Co., Ltd. | 0.5 parts |
| Methyl ethyl ketone | 70 parts |
| Toluene (Coating solution for magenta ink layer formation) | 20 parts |
| Magenta dye (MS Magenta by Mitsui Toatsu Chemicals, Inc.) | 2 parts |
| Polyvinyl acetate [Denka butyral KY-24 by Denki Kagaku Kogyo Co., Ltd.] | 5.5 parts |
| Polymethyl methacrylate modified polystyrene [Tereda GP-200 by Toa Gosei Kagaku Co., Ltd.] | 1 part |
| Urethane modified silicone oil [Daiaroma: SP-2105 by Dai Nippon Seika Kogyo Co., Ltd. | 0.5 parts |
| Methyl ethyl ketone | 70 parts |
| Toluene (Coating solution for cyan ink layer formation) | 20 parts |
| Magenta dye (Kayaset Blue by Nippon Kayaku Co., Ltd.) | 3 parts |
| Polyvinyl acetate [Denka butyral KY-24 by Denki Kagaku Kogyo Co., Ltd.] | 5.6 parts |
| Polymethyl methacrylate modified polystyrene [Tereda GP-200 by Toa Gosei Kagaku Co., Ltd.] | 1 part |
| Urethane modified silicone oil [Daiaroma: SP-2105 by Dai Nippon Seika Kogyo Co., Ltd. | 0.5 parts |
| Methyl ethyl ketone | 70 parts |
| Toluene | 20 parts |

(Method for creating an ink sheet for fusion type thermal transfer recording)

A coating solution for ink layer formation having the following composition having the following composition was coated on the polyethylene terephthalate sheet having a thickness of 6 μm with its reverse side processed for prevention of fusion, until each thickness reached 2 μm. Thus, an ink sheet was obtained.

(Coating solution for ink layer formation)

| Carnauba wax | 1 part |
|---|---|
| Ethylene vinyl acetate copolymer [EV40Y by Mitsui Dupont Inc.) | 1 part |
| Carbon black | 3 parts |
| Phenol resin [Tamanoru 521 by Arakawa Kagaku Kogyo Co., Ltd.] | 5 parts |
| Methyl ethyl ketone | 90 parts |

(Formation of face image}

The ink sides of the sublimation transfer recording ink sheet were placed one on top of another, and were heated at an output of 0.23 W per dot with a pulse width of 0.3 through 4.5 m.sec. and a dot density of 16 dots/mm from the ink sheet side, using a thermal head. Thus, a portrait image with gradations was formed on the image carrier layer. In this image, a complex is formed by the aforementioned pigment and the nickel of the image carrier layer.

(Formation of text information)

The ink sides of the fusion type transfer recording ink sheet were placed one on top of another, and were heated at an output of 0.5 W per dot with a pulse width of 1.0 m.sec. and a dot density of 16 dots/mm from the ink sheet side, using a thermal head. Thus, text information was formed on the IC card image recorder.

Then a face image and attribute information were provided, and a transfer foil was used to form a protective layer. The following describes the embodiments of this invention with reference to the drawings:

Fig. 12 is a front side view of an ID card or IC card substrate, and Fig. 13 is a reverse side view of the ID card or IC card. A name, a portrait image and personal identification information are recorded on the front surface of the ID card or IC card substrate. A ruled line is recorded on the reverse surface of the ID card or IC card substrate in such a way that the information on the name and telephone number of an issuer can be added.

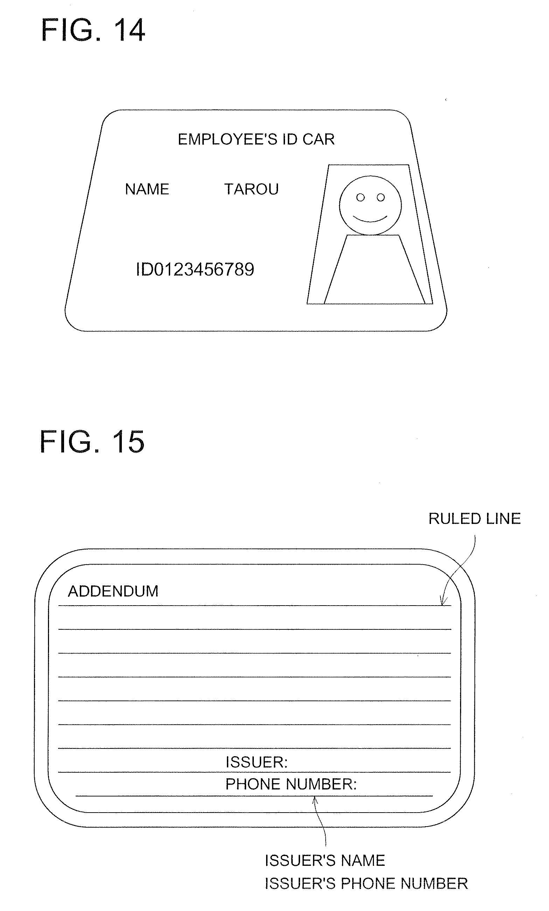

Fig. 14 is a front side view of an ID card or IC card, and Fig. 15 is a reverse side view of an ID card or IC card. Personal identification information such as a name, ID number and face image is recorded on the front surface of the ID card or IC card. A ruled line is provided on the reverse surface of the ID card or IC card so that personal identification information such as the name and telephone number of an issuer is added.

(ID card or IC card creation apparatus)

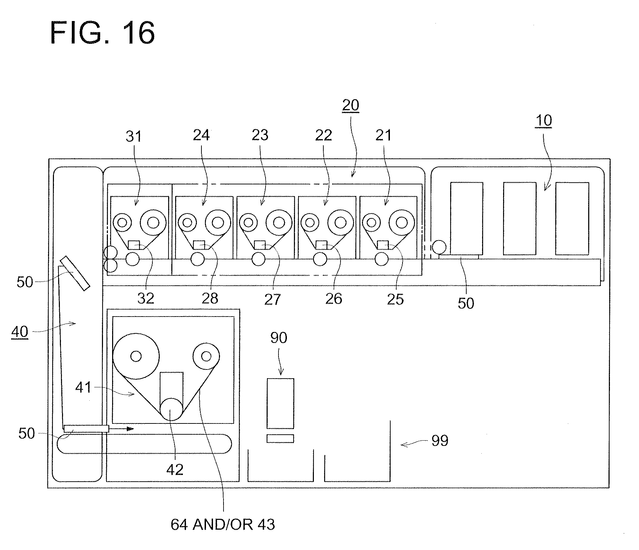

As shown in Fig. 16, a card substrate supply section 10 and information recording section 20 are arranged on the upper position. A protective section and/or optical variable device forming section 40 and activated light curing layer forming section and/or activated light irradiation section 90 are arranged on the lower position. A card is created as an image recording medium, and a sheet can also be created.

In the card substrate supply section 10, a plurality of card substrates 50, cut in the form of a sheet in advance, for writing the personal identification information of a card user are stocked with the face image recording surface facing upward. In this example, the card substrate 50 is composed of a support member and image carrier layer, and the card substrates 50 are one by one automatically fed from the card substrate supply section 10 at a specified time interval.

The information recording section 20 comprises a yellow ribbon cassette 21, a magenta ribbon cassette 22, a cyan ribbon cassette 23 and a black ribbon cassette 24, as well as recording heads 25 through 28 that are arranged corresponding to cassettes 21 through 24, respectively. While the card substrate 50 is moving in the process of thermal transfer with the thermal transfer sheet of the yellow, magenta, cyan and black ribbons, the image area having gradations in the image of the card user' face and others is recorded in the specified area of the image carrier layer. Further, a character ribbon cassette 31 and a recording head 32 are arranged. Recognition-identification information such as the name and date of card issue is recorded by thermal transfer with the character ribbon and others, whereby an image receiving layer is formed.

A transfer foil cassette 41 is arranged n the protective section and/or optical variable device forming section 40, and a thermal transfer head 42 is arranged in conformity to the transfer foil cassette 41. A transparent protective transfer foil 64 and/or an optical variable device transfer foil 43 are subjected to thermal transfer, whereby a transparent protective transfer layer and/or an optical variable device transfer layer are formed.

Then an activated light curing solution is applied by the activated light curing layer forming section and/or activated light irradiation section 90, and exposure is carried out by the activated light. An activated light curing layer is arranged on the transparent protective transfer foil and/or optical variable device transfer layer, and cards are ejected to the card collection section 99.

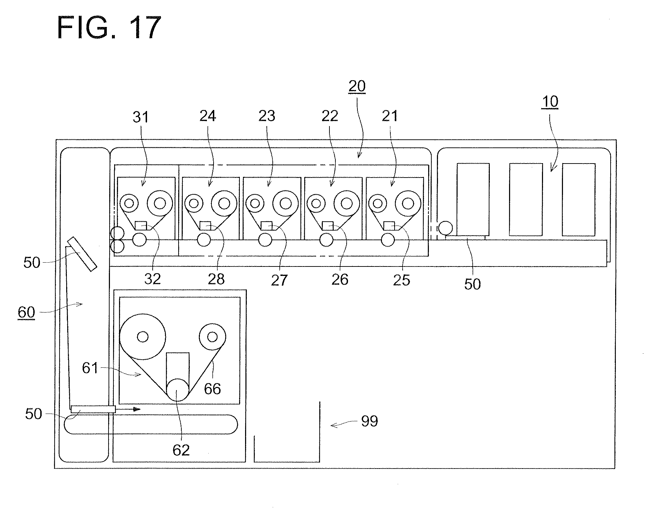

In Fig. 17, the card substrate supply section 10 and information recording section 20 are formed in the same manner. The resin forming section 60 is arranged next to the information recording section 20.

The resin forming section 60 is provided with a transfer foil cassette 61, and a thermal transfer head 62 is arranged in conformity to the transfer foil cassette 61. A transparent surface protective foil 66 (curing type transfer foil) is set on the transfer foil cassette 61. The transparent surface protective foil 66 (curing type transfer foil) is transferred, and a curing type protective layer-containing transfer layer is provided.

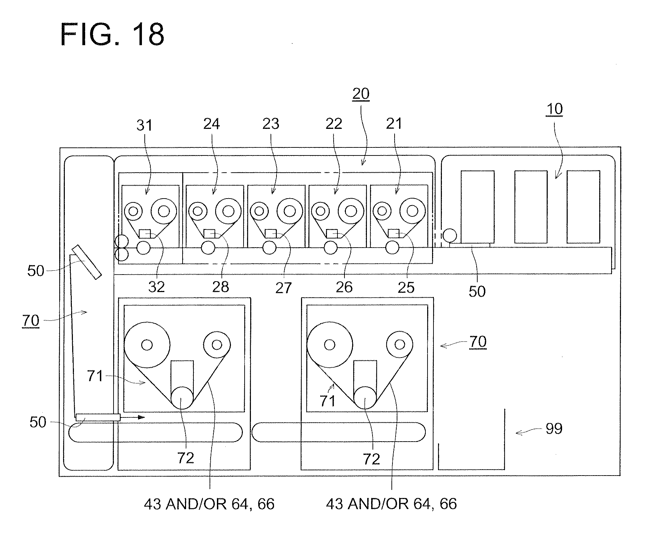

In Fig. 18, the card substrate supply section 10 and information recording section 20 are formed in the same manner. The transparent protective layer, optical variable device forming section and/or resin layer forming section 70 were provided. Subsequently, the transparent protective layer, optical variable device forming section and/or resin layer forming section 70 were again provided.

The transparent protective layer, optical variable device forming section and/or resin layer forming section 70 are provided with a transfer foil cassette 71. A thermal transfer head 72 is arranged in conformity to the transfer foil cassette 71. The optical variable device transfer foil 43, transparent protective transfer foil 64 and curing type transfer foil 66 are transferred to form the optical variable device transfer layer, transparent protective transfer foil and/or curing type protective layer containing transfer layer.

<Method for creating and forming a card surface protective>

<Method for creating a card surface protective photocurable resin composition and providing surface protection 1>

A photocurable resin containing coating solution 1 or 2 composed of the following composition of the recognition-identification image and attribute information image are provided on the image receiving body. In the present invention, to protect the recognition-identification image and attribute information image from the ultraviolet curable resin containing coating solution, the image was protected by one of the following transfer foils 1 through 6. Subsequently, the photocurable resin containing coating solution 1 or 2 was provided.

Using the gravure roll coater having a specific pattern, the aforementioned ultraviolet curable resin containing coating solution is coated on the aforementioned card on which one of the transfer foils 1 through 6 is transferred, in such a way that the amount of coating is 20 $g/m^2$. The ultraviolet curable resin containing coating solutions 1 and 2 are cured under the following curing conditions to form an ultraviolet cured protective layer. To put it more specifically, a method shown in Fig. 6 was used for the formation of this layer.

Curing conditions

| | |
|---|---|
| Light irradiation source: 60 W/cm$^2$ high voltage mercury lamp Irradiation distance: 10 cm Irradiation mode: Optical scanning at 3 cm/sec. [Photocurable resin containing coating solution 1] Bis(3,4-epoxy-6-methylcyclohexylmethyl) adipate | 70 parts |
| Bisphenol A glycidyl ether | 10 parts |
| 1,4-butandiol glycidyl ether [Photocurable resin containing coating solution 2] | 13 parts |
| Bis(3,4-epoxy-6-methylcyclohexylmethyl) adipate | 69 parts |
| Bisphenol A glycidyl ether | 10 parts |
| 1,4-butandiol glycidyl ether | 13 parts |
| Ultraviolet absorber (TINUVIN-400 by Chiba Geigie Inc.) | 1 part |
| Triallyl sulfonium fluoroantimony | 7 parts |

<Method for creating a transfer foil composed of card surface protective photocurable resin compositions and providing surface protection 2>

After the following transfer foils 1 through 6 have been created, heating is applied until the surface temperature reaches 200 degrees Celsius. Using a heat roller having a diameter of 5 cm with a rubber hardness of 85, heating is provided at a pressure of 150 $kg/cm^2$ for 1.2 seconds to apply a process of transfer. To put it more specifically, the method shown by 8 in Fig. 7 is used for this procedure.

[Example of synthesis 1]

(Example of resin synthesis using the activated light cured layer 7)

73 parts of methyl methacrylate, 15 parts of styrene, 12 parts of methacrylic acid, 500 parts of ethanol, 3 parts of $\alpha,\alpha$-azobis isobutyronitrile were placed in an atmosphere of nitrogen flow. Reaction was carried out in an 80-degrees Celsius oil bath in an atmosphere of nitrogen flow for six hours. After that, 3 parts of triethyl ammonium chloride and 1.0 part of glycidyl methacrylate were added, and reaction was carried out for three hours, whereby synthetic binder 1 of the intended acryl copolymer was obtained..

(Transfer foil 1)

The side of the Teijin's Tetron film G2P8-25 μm (the PET one side of which provided with antistatic treatment) provided with antistatic treatment was coated with a stripping layer, intermediate layer, barrier layer and adhesive layer sequentially, using a wire bar coating method, according to the following prescription:

| (Stripping layer): Film thickness 0.5 μm Acryl resin (Dianahl BR-87 by Mitsubishi Rayon Co., Ltd.) | 5 parts |
|---|---|
| Polyvinyl acetoacetal (SP value: 9.4): (KS-1 by Sekisui Chemical Co., Ltd.) | 5 parts |
| Methyl ethyl ketone | 40 parts |
| Toluene | 50 parts |

After coating, drying was carried out at 90 degrees Celsius for 30 seconds.

| <Intermediate layer> Film thickness: 0.3 μm Polyvinyl butyral resin (Esreck BX-1 by Sekisui Chemical Co., Ltd.) | 1.5 parts |
|---|---|
| ToughTex M-1913 (Asahi Kasei Corporation) | 3.5 parts |
| Curing agent Polyisocyanate [Coronate HX by Nippon Polyurethane] | 5 parts |
| Methyl ethyl ketone | 20 parts |
| Toluene | 70 parts |

After coating, drying was carried out at 90 degrees Celsius for 30 seconds. The curing agent was cured at 50 degrees Celsius for 24 hours.

| <Barrier layer>: Film thickness 0.5 μm BX-1 (polyvinyl butyral resin) | 4 parts |
|---|---|
| [Esreck B series by Sekisui Chemical Co., Ltd.] ToughTex M-1913 (Asahi Kasei Corporation) | 4 parts |
| Curing agent Polyisocyanate [Coronate HX by Nippon Polyurethane] | 2 parts |
| Toluene | 50 parts |
| Methyl ethyl ketone | 40 parts |

After coating, drying was carried out at 70 degrees Celsius for 30 seconds.

| <Adhesive layer> Film thickness: 0.3 μm Urethane modified ethylene acrylate copolymer [Hightech S6254B by Toho Chemical Industry Co., Ltd.] | 8 parts |
|---|---|
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

(Transfer foil 2)

The side of the Teijin's Tetron film G2P8-25 μm (the PET one side of which provided with antistatic treatment) provided with antistatic treatment was coated with a stripping layer, intermediate layer, barrier layer and adhesive layer sequentially, using a wire bar coating method, according to the following prescription:

| (Stripping layer): Film thickness 0.5 μm Acryl resin (Dianahl BR-87 by Mitsubishi Rayon Co., Ltd.) | 5 parts |
|---|---|
| Polyvinyl acetoacetal (SP value: 9.4): (KS-1 by Sekisui Chemical Co., Ltd.) | 5 parts |
| Methyl ethyl ketone | 40 parts |
| Toluene | 50 parts |

After coating, drying was carried out at 90 degrees Celsius for 30 seconds.

| <Intermediate layer> Film thickness: 0.3 μm Polyvinyl butyral resin (Esreck BX-1 by Sekisui Chemical Co., Ltd.) | 5 parts |
|---|---|

(continued)

| | |
|---|---|
| ToughTex M-1913 (Asahi Kasei Corporation) | 3 parts |
| Curing agent Polyisocyanate [Coronate HX by Nippon Polyurethane] | 1.5 parts |
| Ultraviolet absorber (TINUVIN-400 by Chiba Geigie Inc.) | 0.5 part |
| Methyl ethyl ketone | 20 parts |
| Toluene | 70 parts |

After coating, drying was carried out at 90 degrees Celsius for 30 seconds. The curing agent was cured at 50 degrees Celsius for 24 hours.

| | |
|---|---|
| <Barrier layer>: Film thickness 0.5 μm BX-1 (polyvinyl butyral resin) [Esreck B series by Sekisui Chemical Co., Ltd.] | 4 parts |
| ToughTex M-1913 (Asahi Kasei Corporation) | 4 parts |
| Curing agent Polyisocyanate [Coronate HX by Nippon Polyurethane] | 2 parts |
| Toluene | 50 parts |
| Methyl ethyl ketone | 40 parts |

After coating, drying was carried out at 70 degrees Celsius for 30 seconds.

| | |
|---|---|
| <Adhesive layer> Film thickness: 0.3 μm Urethane modified ethylene acrylate copolymer [Hightech S6254B by Toho Chemical Industry Co., Ltd.] | 8 parts |
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

(Transfer foil 3)

The side of the Teijin's Tetron film G2P8-25 μm (the PET one side of which provided with antistatic treatment) provided with antistatic treatment was coated with a stripping layer, photocured resin layer, intermediate layer and adhesive layer sequentially, using a wire bar coating method, according to the following prescription:

| | |
|---|---|
| (Stripping layer): Film thickness 0.2 μm Polyvinyl alcohol (GL-05) (by Nippon Gosei Kagaku Co., Ltd.) | 10 parts |
| Water | 90 parts |

The stripping layer was coated and dried at 90 degrees Celsius for 30 seconds.

| | |
|---|---|
| (Photocured resin layer) Film thickness: 8.0 μm A-9300 and EA-1020 by Shinnakamura Kagaku Co., Ltd.: 35 parts and 11.75 parts, respectively Reaction initiator Irgacure 184 by Chiba Specialty Chemicals | 5 parts |
| Resin 1 using the activated light curing layer | 48 parts |
| Toluene | 500 parts |

After having been coated, the activated photocurable compound was dried at 90 degrees Celsius for 30 seconds. Then it was subjected to photocuring by a mercury lamp (300 mJ/$cm^2$).

| | |
|---|---|
| <Intermediate layer> Film thickness: 0.6 μm Polyvinyl butyral resin (Esreck BX-1 by Sekisui Chemical Co., Ltd.) | 5 parts |
| ToughTex M-1913 (Asahi Kasei Corporation) | 3 parts |
| Curing agent Polyisocyanate [Coronate HX by Nippon Polyurethane] | 2 parts |
| Methyl ethyl ketone | 90 parts |

After coating, the curing agent was cured at 50 degrees Celsius for 24 hours.

| <Adhesive layer> Film thickness: 0.3 μm Urethane modified ethylene acrylate copolymer [Hightech S6254B by Toho Chemical Industry Co., Ltd.] | 8 parts |
|---|---|
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

(Transfer foil 4)

The side of the Teijin's Tetron film G2P8-25 μm (the PET one side of which provided with antistatic treatment) not provided with antistatic treatment was coated with a stripping layer, photocured resin layer, intermediate layer, primer layer and adhesive layer sequentially, using a wire bar coating method, according to the following prescription:

| (Stripping layer 1): Film thickness 0.2 μm Polyvinyl alcohol (GL-05) (by Nippon Gosei Kagaku Co., Ltd.) | 10 parts |
|---|---|
| Water | 90 parts |

The stripping layer was coated and dried at 90 degrees Celsius for 30 seconds.

| (Photocured resin layer) Film thickness8.0 μm A-9300 and EA-1020 by Shinnakamura Kagaku Co., Ltd. | 35/11.75 parts |
|---|---|
| Reaction initiator | |
| Irgacure 184 by Chiba Specialty Chemicals) | 5 parts |
| Resin 1 using the activated light curing layer | 48 parts |
| Toluene | 500 parts |

After having been coated, the activated photocurable compound was dried at 90 degrees Celsius for 30 seconds. Then it was subjected to photocuring by a mercury lamp (300 mJ/cm$^2$).

| <Intermediate layer> Film thickness: 0.6 μm Polyvinyl butyral resin (Esreck BX-1 by Sekisui Chemical Co., Ltd.) | 4 parts |
|---|---|
| ToughTex M-1913 (Asahi Kasei Corporation) | 4 parts |
| Curing agent Polyisocyanate [Coronate HX by Nippon Polyurethane] | 2 parts |
| Methyl ethyl ketone | 90 parts |

After coating, the curing agent was cured at 50 degrees Celsius for 24 hours.

| <Primer layer> Film thickness: 1.2 μm Polyvinyl butyral resin (Esreck BX-1 by Sekisui Chemical Co., Ltd.) | 3 parts |
|---|---|
| EpoFriend A-1020 (Daicel Chemical Industries, Ltd.) | 6 parts |
| Curing agent Polyisocyanate [Cornate HX by Nippon Polyurethane] | 2 parts |
| Ultraviolet absorber (TINUVIN-928 by Chiba Geigie Inc.) | 1 part |
| Methyl ethyl ketone | 90 parts |

After coating, the curing agent was cured at 50 degrees Celsius for 24 hours.

| <Adhesive layer> Film thickness: 0.3 μm | |
|---|---|
| Urethane modified ethylene acrylate copolymer [Hightech S6254B by Toho Chemical Industry Co., Ltd.] | 8 parts |
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

(Transfer foil 5)

The side of the Teijin's Tetron film G2P8-25 μm (the PET one side of which provided with antistatic treatment) provided with antistatic treatment was coated with a stripping layer, photocured resin layer, optical variable device layer, intermediate layer, primer layer and adhesive layer sequentially, using a wire bar coating method, according to the following prescription:

| | |
|---|---|
| (Stripping layer 1): Film thickness 0.2 μm Polyvinyl alcohol (GL-05) (by Nippon Gosei Kagaku Co., Ltd.) | 10 parts |
| Water | 90 parts |

The stripping layer was coated and dried at 90 degrees Celsius for 30 seconds.

| | |
|---|---|
| (Optical variable device layer) Film thickness: 2.0 μm (Photocured resin layer) Film thickness: 5.0 μm | 5 parts |
| A-9300 and EA-1020 by Shinnakamura Kagaku Co., Ltd.: 35 parts and 11.75 parts, respectively | |
| Reaction initiator Irgacure 184 by Chiba Specialty Chemicals) | |
| Resin 1 using the activated light curing layer | 48 parts |
| Toluene | 500 parts |

After having been coated, the activated photocurable compound was dried at 90 degrees Celsius for 30 seconds. Then it was subjected to photocuring by a mercury lamp (300 mJ/cm$^2$).

| | |
|---|---|
| <Intermediate layer> Film thickness: 0.6 μm Polyvinyl butyral resin (Esreck BX-1 by Sekisui Chemical Co., Ltd.) | 4 parts |
| ToughTex M-1913 (Asahi Kasei Corporation) | 3 parts |
| Curing agent Polyisocyanate [Coronate HX by Nippon Polyurethane] | 2 parts |
| Ultraviolet absorber (TINUVIN-928 by Chiba Geigie Inc.) | 1 part |
| Methyl ethyl ketone | 90 parts |

After coating, the curing agent was cured at 50 degrees Celsius for 24 hours.

| | |
|---|---|
| (Primer layer) Film thickness: 1.2 μm Polyvinyl butyral resin (Esreck BX-1 by Sekisui Chemical Co., Ltd.) | 3 parts |
| EpoFriend A-1020 (Daicel Chemical Industries, Ltd.) | 5 parts |
| Curing agent Polyisocyanate [Coronate HX by Nippon Polyurethane] | 2 parts |
| Methyl ethyl ketone | 90 parts |

After coating, the curing agent was cured at 50 degrees Celsius for 24 hours.

| | |
|---|---|
| <Adhesive layer> Film thickness: 0.3 μm Urethane modified ethylene acrylate copolymer [Hightech S6254B by Toho Chemical Industry Co., Ltd.] | 8 parts |
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

(Transfer foil 6)

The side of the Teijin's Tetron film G2P8-25 μm (the PET one side of which provided with antistatic treatment) provided with antistatic treatment was coated with a stripping layer, photocured resin layer, intermediate layer, and adhesive layer sequentially, using a wire bar coating method, according to the following prescription:

| | |
|---|---|
| (Stripping layer 1): Film thickness 0.2 μm Polyvinyl alcohol (GL-05) (by Nippon Gosei Kagaku Co., Ltd.) | 10 parts |
| Water | 90 parts |

The stripping layer was coated and dried at 90 degrees Celsius for 30 seconds.

| | |
|---|---|
| (Photocured resin layer) Film thickness: 8.0 μm A-9300 and EA-1020 by Shinnakamura Kagaku Co., Ltd.: 35 parts and 12 parts, respectively Reaction initiator Irgacure 184 by Chiba Specialty Chemicals) | 5 parts |
| Resin 1 using the activated light curing layer | 38 parts |
| Ultraviolet absorber (TINUVIN-123 by Chiba Geigie Inc.) | 10 parts |
| Ultraviolet absorber (TINUVIN-400 by Chiba Geigie Inc.) | 9 parts |
| Toluene | 500 parts |

After having been coated, the activated photocurable compound was dried at 90 degrees Celsius for 30 seconds. Then it was subjected to photocuring by a mercury lamp (300 mJ/cm$^2$).

| | |
|---|---|
| <Intermediate layer> Film thickness: 0.6 μm Polyvinyl butyral resin (Esreck BX-1 by Sekisui Chemical Co., Ltd.) | 5 parts |
| ToughTex M-1913 (Asahi Kasei Corporation) | 3 parts |
| Curing agent Polyisocyanate [Coronate HX by Nippon Polyurethane] | 2 parts |
| Methyl ethyl ketone | 90 parts |

The curing agent was cured at 50 degrees Celsius for 24 hours.

| | |
|---|---|
| <Adhesive layer> Film thickness: 0.3 μm Urethane modified ethylene acrylate copolymer [Hightech S6254B by Toho Chemical Industry Co., Ltd.] | 8 parts |
| Polyacrylic acid ester copolymer [Jurimer AT-510 by Nippon Junyaku Co., Ltd.] | 2 parts |
| Water | 45 parts |
| Ethanol | 45 parts |

After coating, drying was carried out at 70 degrees Celsius for 30 seconds.

[Evaluation method]

<Scratch strength (wear resistance) measuring method>

Using a wear resistance tester (HEIDON-18), the load was changed in the range from 0 through 300 g, and a 0.1 mm-diameter sapphire probe slid over the surface of the created card. The load was measured when a scratch had just started to appear on the writing layer surface of the card. It can be seen from Table 1 that the result is better when the load is greater.

<Image sharpness>

The image sharpness was evaluated by visual observation. The ID card with electronic parts mounted thereon was checked to evaluate the fused characters and sublimation image in the vicinity of the electronic parts.

1) Fused character printability

The reproducibility of a one-dot line was checked to see if there is any scratched or missing portion of the printed image. Continuity of an image was also checked.

A: No problem with reproducibility
B: A slightly scratched portion
C: A seriously scratched portion

2) Sublimation image printability

The reproducibility of a one-dot line was checked to see if there is any scratched or missing portion of the printed image. Continuity of an image was also checked.

A: No problem with reproducibility
B: A slightly scratched portion
C: A seriously scratched portion

<Water resistance evaluation>

A finished card was dipped in tap water having a temperature of 25 degrees Celsius for three days, and the card surface was checked. The following items were checked by visual observation:

A: No change from the initial card status
B: Bubbles are observed on the card surface.
C: A transfer foil is separated and the protective layer is not working properly.

<Evaluation of wet adhesion (adhesion subsequent to light resistance)>

A finished card was dipped in tap water having a temperature of 25 degrees Celsius for one day, and the card surface was checked. The following items were checked by visual observation:

A: No change from the initial card status
B: 90% or more of the transfer foil or image portion remains.
C: 70% or more of the transfer foil or image portion remains.
X: The transfer foil or image portion has separated.

<Light resistance>

The portion of the obtained printed samples having a cyan color reflection density D of 1.0 was brought into contact with a xenon fade meter (50,000 luces) for one through three weeks, and then the remaining density percentage was evaluated according to the following criteria:

AA    90% or more
A      80% or more to 90% exclusive
B      70% or more to 80% exclusive
C      70 or less

<Thermal yellowing resistance>

A created card was kept in a thermostatic bath at a temperature of 90 degrees Celsius for 10 days through 20 days, and the density of the white background of the card was evaluated.
The densities of the R, G and B were measured by the X - rite 310.

A: 0.25 or less for all the R, G and B
B: more than 0.25 for any one of the R, G and B
C: more than 0.25 for all the R, G and B

Table 1-1

| | Method for creating the ID card or ID card substrate with electronic parts mounted thereon | | | Method for creating the ID card or ID card substrate with electronic parts mounted thereon | | |
|---|---|---|---|---|---|---|
| | First sheet member | Second sheet member | Card creation method | Apparatus for creating the ID card or ID card substrate with electronic parts mounted thereon | Photo-curable compound containing coating solution | Surface protective transfer foil |
| Embodiment 1 | 1 | 1 | 1 | Fig. 16 | 1 | 2 |
| Embodiment 2 | 1 | 2 | 1 | Fig. 18 | - | Card side/ card extreme surface layer = 4/4 |
| Embodiment 3 | 2 | 3 | 1 | Fig. 16 | 1 | |
| Embodiment 4 | 2 | 3 | 1 | Fig. 17 | - | 4 |
| Embodiment 5 | 2 | 3 | 1 | Fig. 17 | - | 6 |
| Embodiment 6 | 2 | 3 | 1 | Fig. 18 | - | Card side/ card extreme surface layer = 4/4 |
| Embodiment 7 | 3 | 2 | 1 | Fig. 18 | - | Card side/ card extreme surface layer = 4/4 |
| Embodiment 8 | 3 | 2 | 1 | Fig. 18 | - | Card side/ card extreme surface layer = 5/4 |
| Embodiment 9 | 3 | 2 | 1 | Fig. 16 | 2 | |
| Embodiment 10 | 4 | 4 | 1 | Fig. 17 | - | 3 |
| Embodiment 11 | 4 | 4 | 1 | Fig. 18 | - | Card Card side/card extreme surface layer = 3/3 |
| Embodiment 12 | 4 | 4 | 1 | Fig. 18 | - | Card side/ card extreme surface layer = 4/3 |

Table 1-1  (continued)

| | Method for creating the ID card or ID card substrate with electronic parts mounted thereon | | | Method for creating the ID card or ID card substrate with electronic parts mounted thereon | | |
|---|---|---|---|---|---|---|
| | First sheet member | Second sheet member | Card creation method | Apparatus for creating the ID card or ID card substrate with electronic parts mounted thereon | Photo-curable compound containing coating solution | Surface protective transfer foil |
| Embodiment 13 | 5 | 3 | 1 | Fig. 17 | - | |
| Embodiment 14 | 5 | 3 | 1 | Fig. 18 | - | Card side/ card extreme surface layer = 5/4 |

Table 1-2

| | Method for creating the ID card or ID card substrate with electronic parts mounted thereon | | | Method for creating the ID card or ID card substrate with electronic parts mounted thereon | | |
|---|---|---|---|---|---|---|
| | First sheet member | Second sheet member | Card creation method | Apparatus for creating the ID card or ID card substrate with electronic parts mounted thereon | Photo-curable compound containing coating solution | Surface protective transfer foil |
| Comparative example 1 | 6 | 2 | 1 | Fig. 17 | - | 1 |
| Comparative example 2 | 6 | 2 | 1 | Fig. 18 | - | Card side/ card extreme surface layer = 3/3 |
| Comparative example 3 | 7 | 5 | 1 | Fig. 17 | - | 1 |
| Comparative example 4 | 7 | 5 | 1 | Fig. 17 | - | 3 |
| Comparative example 5 | 8 | 5 | 1 | Fig. 16 | 1 | 1 |
| Comparative example 6 example 6 | 8 | 5 | 1 | Fig. 18 | - | Card side/ card extreme surface layer = 4/3 |

Table 1-2   (continued)

|  | Method for creating the ID card or ID card substrate with electronic parts mounted thereon | | | Method for creating the ID card or ID card substrate with electronic parts mounted thereon | | |
|---|---|---|---|---|---|---|
|  | First sheet member | Second sheet member | Card creation method | Apparatus for creating the ID card or ID card substrate with electronic parts mounted thereon | Photo-curable compound containing coating solution | Surface protective transfer foil |
| Comparative example 7 | 9 | 6 | 1 | Fig. 16 | 1 | 1 |
| Comparative example 8 | 9 | 6 | 1 | Fig. 17 | - | 3 |
| Comparative example 9 | 10 | 6 | 1 | Fig. 17 | - | 3 |

Table 1-3

|  | Method for creating the ID card or ID card substrate with electronic parts mounted thereon | | | Method for creating the ID card or ID card substrate with electronic parts mounted thereon | | |
|---|---|---|---|---|---|---|
|  | First sheet member | Second sheet member | Card creation method | Apparatus for creating the ID card or ID card substrate with electronic parts mounted thereon | Photo-curable compound containing coating solution | Surface protective transfer foil |
| Embodiment 15 | 1 | 1 | 2 | Fig. 16 | 1 | 2 |
| Embodiment 16 | 1 | 2 | 2 | Fig. 18 | - | Card Card side/card extreme surface layer = 4/4 |
| Embodiment 17 | 2 | 3 | 2 | Fig. 16 | 1 |  |
| Embodiment 18 | 2 | 3 | 2 | Fig. 17 | - | 4 |
| Embodiment 19 | 2 | 3 | 2 | Fig. 17 | - | 6 |

Table 1-3   (continued)

| | Method for creating the ID card or ID card substrate with electronic parts mounted thereon | | | Method for creating the ID card or ID card substrate with electronic parts mounted thereon | | |
|---|---|---|---|---|---|---|
| | First sheet member | Second sheet member | Card creation method | Apparatus for creating the ID card or ID card substrate with electronic parts mounted thereon | Photo-curable compound containing coating solution | Surface protective transfer foil |
| Embodiment 20 | 2 | 3 | 2 | Fig. 18 | - | Card Card side/card extreme surface layer = 4/4 |
| Embodiment 21 | 3 | 2 | 2 | Fig. 18 | - | Card side/card side/card extreme surface layer = 4/4 |
| Embodiment 22 | 3 | 2 | 2 | Fig. 18 | - | Card side/card extreme surface layer = 5/4 |
| Embodiment 23 | 3 | 2 | 2 | Fig. 16 | 2 | 1 |
| Embodiment 24 | 4 | 4 | 2 | Fig. 17 | - | 3 |
| Embodiment 25 | 4 | 4 | 2 | Fig. 18 | - | Card side/card extreme surface layer = 3/3 |
| Embodiment 26 | 4 | 4 | 2 | Fig. 18 | - | Card side/card extreme surface layer = 4/3 |
| Embodiment 27 | 5 | 3 | 2 | Fig. 17 | - | 5 |
| Embodiment 28 | 5 | 3 | 2 | Fig. 18 | - | Card side/card extreme surface layer = 5/4 |

Table 1-4

| | Method for creating the ID card or ID card substrate with electronic parts mounted thereon | | | Method for creating the ID card or ID card substrate with electronic parts mounted thereon | | |
|---|---|---|---|---|---|---|
| | First sheet member | Second sheet member | Card creation method | Apparatus for creating the ID card substrate with electronic parts mounted thereon | Photo-curable compound containing coating solution | Surface protective transfer foil |
| Comparative example 10 | 6 | 2 | 2 | Fig. 17 | - | 1 |
| Comparative example 11 | 6 | 2 | 2 | Fig. 18 | - | Card side/ card extreme surface layer = 3/3 |
| Comparative example 12 | 7 | 5 | 2 | Fig. 17 | - | 1 |
| Comparative example 13 | 7 | 5 | 2 | Fig. 17 | - | 3 |
| Comparative example 14 | 8 | 5 | 2 | Fig. 16 | 1 | 1 |
| Comparative Comparative example 15 | 8 | 5 | 2 | Fig. 18 | - | Card side/ card side/card extreme surface layer = 4/3 |
| Comparative example 16 | 9 | 6 | 2 | Fig. 16 | 1 | 1 |
| Comparative example 17 | 9 | 6 | 2 | Fig. 17 | - | 3 |
| Comparative example 18 | 10 | 6 | 2 | Fig. 17 | - | 3 |
| Comparative example 29 | 12 | 2 | 2 | Fig. 18 | - | Card side/ card extreme surface layer = 3/4 |
| Comparative example 30 | 13 | 2 | 2 | Fig. 18 | - | Card side/ card extreme surface layer = 4/4 |
| Comparative example 19 | 11 | 2 | 2 | Fig. 18 | - | Card side/ card extreme surface layer = 3/3 |

Table 1-5

| | | Result of IC card evaluation | | | | | | | |
|---|---|---|---|---|---|---|---|---|---|
| | Scratch strength | Image sharpness | | Water resistance | Wet adhesion | Light resistance | | Thermal yellowing resistance | |
| | | Fusion portion | Sublima -tion portion | | | 1 week | 3 weeks | 1 week | 3 weeks |
| Embodiment 1 | 289 | B | A | AB | AB | A | B | A | A |
| Embodiment 2 | 279 | B | A | AB | AB | A | A | A | A |
| Embodiment 3 | 290 | A | A | A | AA | A | A | A | A |
| Embodiment 4 | 189 | A | A | AB | AA | A | A | A | A |
| Embodiment 5 | 190 | A | A | A | A | A | A | A | A |
| Embodiment 6 | 256 | A | A | A | AA | A | A | A | A |
| Embodiment 7 | 254 | A | A | AB | AB | A | A | A | A |
| Embodiment 8 | 231 | A | A | AB | AB | A | A | A | A |
| Embodiment 9 | 287 | A | A | AB | AB | A | A | A | A |
| Embodiment 10 | 206 | A | A | A | AA | A | B | A | A |
| Embodiment 11 | 264 | A | A | A | AA | A | B | A | A |
| Embodiment 12 | 249 | A | A | A | AA | A | A | A | A |
| Embodiment 13 | 198 | AA | AA | A | A | A | A | A | A |
| Embodiment 14 | 223 | AA | AA | A | A | A | A | A | A |
| Comparative example 1 | 105 | B | A | C | C | B | B | A | A |
| Comparative example 2 | 240 | B | A | B | B | B | B | A | A |
| Comparative example 3 | 86 | B | A | C | C | C | C | A | A |
| Comparative example 4 | 200 | B | A | A | A | C | C | A | A |
| Comparative example 5 | 278 | B | A | A | A | B | C | A | A |

Table 1-5   (continued)

| | Result of IC card evaluation | | | | | | | | |
|---|---|---|---|---|---|---|---|---|---|
| | Scratch strength | Image sharpness | | Water resistance | Wet adhesion | Light resistance | | Thermal yellowing resistance | |
| | | Fusion portion | Sublima-tion portion | | | 1 week | 3 weeks | 1 week | 3 weeks |
| Comparative example 6 | 250 | B | A | A | A | B | C | A | A |
| Comparative example 7 | 289 | B | B | A | A | A | B | B | C |
| Comparative example 8 | 196 | B | B | A | A | B | B | B | C |
| Comparative example 9 | 190 | B | B | A | A | A | A | B | C |

Table 1-6

| | Result of IC card evaluation | | | | | | | | |
|---|---|---|---|---|---|---|---|---|---|
| | Scratch strength | Image sharpness | | Water resistance | Wet adhesion | Light resistance resistance | | Thermal yellowing | |
| | | Fusion portion | Sublimation portion | | | 1 week | 3 weeks | 1 week | 3 weeks |
| Embodiment 15 | 296 | C | A | A | A | A | B | A | A |
| Embodiment 16 | 280 | C | A | A | A | A | A | A | A |
| Embodiment 17 | 293 | A | A | A | AA | A | A | A | A |
| Embodiment 18 | 180 | A | A | AB | AA | A | A | A | A |
| Embodiment 19 | 183 | A | A | A | A | A | A | A | A |
| Embodiment 20 | 263 | A | A | A | AA | A | A | A | A |
| Embodiment 21 | 260 | A | A | A | A | A | A | A | A |
| Embodiment 22 | 226 | A | A | A | A | A | A | A | A |
| Embodiment 23 | 290 | A | A | A | A | A | A | A | A |
| Embodiment 24 | 196 | A | A | A | AA | A | B | A | A |
| Embodiment 25 | 256 | A | A | A | AA | A | B | A | A |
| Embodiment 26 | 240 | A | A | A | AA | A | A | A | A |
| Embodiment 27 | 200 | AA | AA | A | A | A | A | A | A |
| Embodiment 28 | 219 | AA | AA | A | A | A | A | A | A |
| Comparative example 10 | 110 | C | B | C | C | B | B | A | A |
| Comparative example 11 | 230 | C | B | B | B | B | B | A | A |
| Comparative example 12 | 91 | C | B | C | C | C | C | A | A |
| Comparative example 13 | 197 | C | B | A | A | C | C | A | A |
| Comparative example 14 | 289 | C | B | A | A | B | C | A | A |

EP 1 547 806 A1

56

Table 1-6   (continued)

| | Result of IC card evaluation | | | | | | | | |
| | Scratch strength | Image sharpness | | Water resistance | Wet adhesion | Light resistance resistance | | Thermal yellowing | |
| | | Fusion portion | Sublimation portion | | | 1 week | 3 weeks | 1 week | 3 weeks |
| Comparative example 15 | 254 | C | B | A | A | B | C | A | A |
| Comparative example 16 | 278 | C | C | A | A | A | B | B | C |
| Comparative example 17 | 193 | C | C | A | A | B | B | B | C |
| Comparative example 18 | 190 | C | C | A | A | A | A | B | C |
| Embodiment 29 | 200 | A | A | A | AA | A | A | A | A |
| Embodiment 30 | 198 | A | A | A | AA | A | A | A | A |
| Comparative example 19 | 197 | C | B | C | C | C | C | A | A |

In the present invention, protection is provided by a surface protective layer containing at least the photocurable resin and ultraviolet absorber, whereby light resistance, image sharpness and thermal yellowing resistance are improved, and durability is enhanced.

INDUSTRIAL FIELD OF APPLICATION

The present invention provides a certification/identification card characterized by excellent light resistance, image sharpness and image sharpness. This recognition-identification card is protected against yellowing for a long time when the first sheet member is stored at a high temperature. This card can be used as a contact type or contactless type electronic or magnetic card, or IC card for memorizing personal information requiring security against forgery and alteration is required.

**Claims**

1. A recognition-identification card comprising a second sheet member, a first sheet member and an image carrier layer in that order, wherein said first sheet member is a white polyester having a degree of whiteness of 80 through 95 percent, and an ultraviolet absorber-containing layer is arranged between said first sheet member and image carrier layer.

2. The recognition-identification card described in Claim 1 wherein a cushioning layer is arranged between said first sheet member and image carrier layer.

3. A recognition-identification card comprising a second sheet member, a first sheet member and an image carrier layer for carrying an image in that order, wherein said first sheet member is a white polyester having a degree of whiteness of 80 through 95 percent, and a silane coupling agent-containing layer and a cushioning layer are arranged between said first sheet member and image carrier layer.

4. The recognition-identification card described in Claim 1 wherein an electronic parts-containing layer is arranged between said first and second sheet members.

5. The recognition-identification card described in Claim 2 wherein an electronic parts-containing layer is arranged between said first and second sheet members.

6. The recognition-identification card described in Claim 3 wherein an electronic parts-containing layer is arranged between said first and second sheet members.

7. The recognition-identification card described in any one of Claims 2, 3, 5 and 6 wherein the penetration displacement of a thermal mechanical analyzer (TMA) at a temperature of 100 degrees Celsius does not exceed 30 percent with respect to said thickness of cushioning layer, and said penetration displacement of the thermal mechanical analyzer (TMA) at a temperature of 170 degrees Celsius is not less than 30 percent with respect to the thickness of the cushioning layer.

8. The recognition-identification card described in any one of Claims 1 through 7 wherein said image carrier layer is further **characterized in that** an image is set according to said sublimation heat transfer method and/or any one of said fusion heat transfer method, inkjet method and retransfer.

9. A recognition-identification card comprising a second sheet member, a first sheet member and an image carrier layer in that order, wherein said first sheet member is a white polyester having a degree of whiteness of 80 through 95 percent, and a surface protective layer containing at least a photocurable resin and an ultraviolet absorber is arranged on said image carrier layer.

10. The recognition-identification card described in Claim 9 wherein an electronic parts-containing layer is arranged between said first and second sheet members.

11. The recognition-identification card described in any one of Claims 1 through 10 wherein identification information and bibliographical information are recorded on said image carrier layer.

**12.** The recognition-identification card described in Claim 11 wherein identification information represents personnel information on address, name and the date of birth.

**13.** The recognition-identification card described in any one of Claims 1 through 10 wherein a face image is recorded on said image carrier layer.

**14.** A method of manufacturing a recognition-identification card wherein:

an image is formed on an image carrier layer; and
a surface protective layer containing said photocurable resin and ultraviolet absorber is transferred onto said card substrate containing a second sheet member, a first sheet member composed of white polyester having a degree of whiteness of 80 through 95 percent, and an image carrier layer in that order, using a photocurable resin layer and a transfer foil containing an ultraviolet absorber on said image carrier layer with said image formed thereon.

**15.** A method of manufacturing a recognition-identification card wherein:

an image is formed on an image carrier layer; and
a surface protective layer containing said photocurable resin and ultraviolet absorber is transferred onto said card substrate containing a second sheet member, a first sheet member composed of a white polyester having a degree of whiteness of 80 through 95 percent, and an image carrier layer in that order, as well as a layer containing electronic parts between said first and second sheet members, using a photocurable resin layer and a transfer foil containing an ultraviolet absorber on said image carrier layer with said image formed thereon.

**16.** The method of manufacturing a recognition-identification card described in Claim 14 or 15 wherein identification information and bibliographical information are recorded on said image carrier layer.

**17.** The method of manufacturing a recognition-identification card described in Claim 16 wherein identification information represents personnel information on address, name and said date of birth.

**18.** The method of manufacturing a recognition-identification card described in Claim 14 or 15 10 wherein a face image is recorded on said image carrier layer.

## FIG. 1

CARD SUBSTRATE 100

IMAGE CARRIER LAYER 103
ULTRAVIOLET ABSORBER-
CONTAINING LAYER 104
FIRST SHEET MEMBER 101
SECOND SHEET MEMBER 102

## FIG. 2

CARD SUBSTRATE 100

IMAGE CARRIER LAYER 103
ULTRAVIOLET ABSORBER-
CONTAINING LAYER 104
CUSHIONING LAYER 105
FIRST SHEET MEMBER 101
SECOND SHEET MEMBER 102

# FIG. 3

CARD SUBSTRATE 100
IMAGE CARRIER LAYER 103
SILANE COUPLING AGENT-CONTAINING LAYER 106
ULTRAVIOLET ABSORBER-CONTAINING LAYER 104
CUSHIONING LAYER 105
FIRST SHEET MEMBER 101
SECOND SHEET MEMBER 102

# FIG. 4

ELECTRONIC PARTS 108
CARD SUBSTRATE 100
IC CHIP 108a
ANTENNA 108b
IMAGE CARRIER LAYER 103
ULTRAVIOLET ABSORBER-CONTAINING LAYER 104
FIRST SHEET MEMBER 101
ADHESIVE LAYER 107
SECOND SHEET MEMBER 102

# FIG. 5

ELECTRONIC PARTS 108

CARD SUBSTRATE 100

IC CHIP 108a

ANTENNA 108b

IMAGE CARRIER LAYER 103

ULTRAVIOLET ABSORBER-
CONTAINING LAYER 104

CUSHIONING LAYER 105

FIRST SHEET MEMBER 101

ADHESIVE LAYER 107

SECOND SHEET MEMBER 102

# FIG. 6

ELECTRONIC PARTS 108

CARD SUBSTRATE 100

IC CHIP 108a

ANTENNA 108b

IMAGE CARRIER LAYER 103

SILANE COUPLING AGENT-
CONTAINING LAYER 106

CUSHIONING LAYER 105

FIRST SHEET MEMBER 101

ADHESIVE LAYER 107

SECOND SHEET MEMBER 102

# FIG. 7 (a)

CARD SUBSTRATE 100
INFORMATION 111a    IMAGE 111b

SURFACE PROTECTIVE LAYER 112
IMAGE CARRIER LAYER 103

FIRST SHEET MEMBER 101
SECOND SHEET MEMBER 102

# FIG. 7 (b)

CARD SUBSTRATE 100    SURFACE PROTECTIVE LAYER 112
INFORMATION 111a    IMAGE 111b    IMAGE CARRIER LAYER 103

ULTRAVIOLET ABSORBER-
CONTAINING LAYER 104

FIRST SHEET MEMBER 101
SECOND SHEET MEMBER 102

# FIG. 7 (c)

CARD SUBSTRATE 100    SURFACE PROTECTIVE LAYER 112
INFORMATION 111a    IMAGE 111b    IMAGE CARRIER LAYER 103

ULTRAVIOLET ABSORBER-
CONTAINING LAYER 104
CUSHIONING LAYER 105
FIRST SHEET MEMBER 101
SECOND SHEET MEMBER 102

# FIG. 7 (d)

CARD SUBSTRATE 100    SURFACE PROTECTIVE LAYER 112
INFORMATION 111a    IMAGE 111b

SILANE COUPLING AGENT-
CONTAINING LAYER 106
IMAGE CARRIER LAYER 103
FIRST SHEET MEMBER 101
SECOND SHEET MEMBER 102

# FIG. 7 (e)

CARD SUBSTRATE 100    SURFACE PROTECTIVE LAYER 112
INFORMATION 111a    IMAGE 111b    IMAGE CARRIER LAYER 103

SILANE COUPLING AGENT-
CONTAINING LAYER 106
CUSHIONING LAYER 105
FIRST SHEET MEMBER 101
SECOND SHEET MEMBER 102

## FIG. 8 ( a )

CARD SUBSTRATE 100
INFORMATION 111a — ELECTRONIC PARTS 108
ANTENNA 108b — IMAGE 111b — IC CHIP 108a

— SURFACE PROTECTIVE LAYER 112
— IMAGE CARRIER LAYER 103
— FIRST SHEET MEMBER 101
— ADHESIVE LAYER 107
— SECOND SHEET MEMBER 102

## FIG. 8 ( b )

CARD SUBSTRATE 100 — ELECTRONIC PARTS 108
INFORMATION 111a — ELECTRONIC PARTS 108
ANTENNA 108b — IMAGE 111b — SURFACE PROTECTIVE LAYER 112

— IMAGE CARRIER LAYER 103
— ULTRAVIOLET ABSORBER-CONTAINING LAYER 104
— FIRST SHEET MEMBER 101
— ADHESIVE LAYER 107
— SECOND SHEET MEMBER 102

## FIG. 8 ( c )

CARD SUBSTRATE 100 — IC CHIP 108a
INFORMATION 111a — ELECTRONIC PARTS 108
ANTENNA 108b — IMAGE 111b — SURFACE PROTECTIVE LAYER 112

— IMAGE CARRIER LAYER 103
— ULTRAVIOLET ABSORBER-CONTAINING LAYER 104
— CUSHIONING LAYER 105
— FIRST SHEET MEMBER 101
— ADHESIVE LAYER 107
— SECOND SHEET MEMBER 102

## FIG. 8 ( d )

CARD SUBSTRATE 100
ELECTRONIC PARTS 108
INFORMATION 111a — IC CHIP 108a
ANTENNA 108b — IMAGE 111b — SURFACE PROTECTIVE LAYER 112

— SILANE COUPLING AGENT-CONTAINING LAYER 106
— IMAGE CARRIER LAYER 103
— FIRST SHEET MEMBER 101
— ADHESIVE LAYER 107
— SECOND SHEET MEMBER 102

## FIG. 8 ( e )

CARD SUBSTRATE 100
ELECTRONIC PARTS 108
INFORMATION 111a — IC CHIP 108a
ANTENNA 108b — IMAGE 111b — SURFACE PROTECTIVE LAYER 112

— IMAGE CARRIER LAYER 103
— CUSHIONING LAYER 105
— SILANE COUPLING AGENT-CONTAINING LAYER 106
— FIRST SHEET MEMBER 101
— ADHESIVE LAYER 107
— SECOND SHEET MEMBER 102

# FIG. 9 ( a )

CARD SURFACE PROTECTION
TRANSFER FOIL 120

STRIPPING LAYER 121
SURFACE PROTECTIVE LAYER 112

CARD SUBSTRATE 100

INFORMATION 111a    IMAGE 111b

IMAGE CARRIER LAYER 103
FIRST SHEET MEMBER 101
SECOND SHEET MEMBER 102

# FIG. 9 ( b )

CARD SURFACE PROTECTION
TRANSFER FOIL 120

STRIPPING LAYER 121

CARD SUBSTRATE 100

INFORMATION 111a    IMAGE 111b

SURFACE PROTECTIVE LAYER 112
IMAGE CARRIER LAYER 103
FIRST SHEET MEMBER 101
SECOND SHEET MEMBER 102

# FIG. 10 ( a )

CARD SURFACE PROTECTION
TRANSFER FOIL 120

— STRIPPING LAYER 121
— SURFACE PROTECTIVE LAYER 112

CARD SUBSTRATE 100

ELECTRONIC PARTS 108

INFORMATION 111a          IMAGE 111b

ANTENNA 108b                IC CHIP 108a

— IMAGE CARRIER LAYER 103
— FIRST SHEET MEMBER 101
— ADHESIVE LAYER 107
— SECOND SHEET MEMBER 102

# FIG. 10 ( b )

CARD SURFACE PROTECTION
TRANSFER FOIL 120

— STRIPPING LAYER 121

CARD SUBSTRATE 100

ELECTRONIC PARTS 108

INFORMATION 111a          IC CHIP 108a

ANTENNA 108b                IMAGE 111b

— SURFACE PROTECTIVE LAYER 112
— IMAGE CARRIER LAYER 103
— FIRST SHEET MEMBER 101
— ADHESIVE LAYER 107
— SECOND SHEET MEMBER 102

# FIG. 11

ADHESIVE DISSOLVE/
SUPPLY SECTION C

LOW-TEMPERATURE
ADHESIVE SUPPLY
SECTION G
FOR LAMINATION

SECOND SHEET MEMBER
(REVERSE SHEET)
SUPPLY SECTION A

LOW-TEMPERATURE
ADHESIVE SUPPLY
SECTION D
FOR LAMINATION

IC/SOLID
MEMBER
SUPPLY
SECTION E

FIRST SHEET
(FRONT SHEET)
SUPPLY SECTION B

IC

FILM THICKNESS
CONTROL ROLL I

FIRST SHEET
FEED MEMBER F

CARD SUBSTRATE
FEED MEMBER J

PRESSURE/
HEATING ROLL H

# FIG. 12

EMPLOYEE'S ID CAR

NAME

# FIG. 13

RULED LINE

ADDENDUM

ISSUER:
PHONE NUMBER:

ISSUER'S NAME
ISSUER'S PHONE NUMBER

# FIG. 14

EMPLOYEE'S ID CAR

NAME      TAROU

ID0123456789

# FIG. 15

RULED LINE

ADDENDUM

ISSUER:

PHONE NUMBER:

ISSUER'S NAME
ISSUER'S PHONE NUMBER

FIG. 16

64 AND/OR 43

FIG. 17

# FIG. 18

43 AND/OR 64, 66          43 AND/OR 64, 66

## INTERNATIONAL SEARCH REPORT

| International application No. |
|---|
| PCT/JP03/12141 |

| A. CLASSIFICATION OF SUBJECT MATTER |
|---|
| Int.Cl$^7$  B42D15/10, B41M5/40, G06K19/10 |

According to International Patent Classification (IPC) or to both national classification and IPC

| B. FIELDS SEARCHED |
|---|
| Minimum documentation searched (classification system followed by classification symbols) |
| Int.Cl$^7$  B42D15/10, B41M5/40, G06K19/10 |

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2002-222403 A  (Konica Corp.), 09 August, 2002 (09.08.02), Full text; all drawings & US 2002/0168513 A1 | 1-18 |
| Y | JP 9-71074 A  (Toray Industries, Inc.), 18 March, 1997 (18.03.97), Par. Nos. [0021], [0060] (Family: none) | 1-18 |
| Y | JP 2002-103827 A  (Dainippon Printing Co., Ltd.), 09 April, 2002 (09.04.02), Par. Nos. [0012] to [0014] & EP 543339 A1        & US 5328888 A & US 5405824 A       & US 5545606 A & US 5672563 A       & DE 69214601 C | 1-2,4-5,7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 December, 2003 (18.12.03) | 20 January, 2004 (20.01.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
|---|
| PCT/JP03/12141 |

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 10-329433 A (Fuji Photo Film Co., Ltd.),<br>15 December, 1998 (15.12.98),<br>Par. Nos. [0011], [0030]<br>(Family: none) | 3,6-7 |

Form PCT/ISA/210 (continuation of second sheet) (July 1998)